# EUROPÄISCHE PATENTANMELDUNG

(11) **EP 3 943 249 A1**
(43) Veröffentlichungstag der Anmeldung: **26.01.2022**
(21) Anmeldenummer: 21177807.1
(22) Anmeldetag: 04.06.2021
(51) Int. Cl.: B25B 27/10, H01R 43/042, B21D 39/04, F16J 13/14

(54) **VERFAHREN ZUR HERSTELLUNG EINER VERBINDUNG, PRESSGERÄT, PRESSWERKZEUG ERFASSUNGSEINRICHTUNG FÜR EIN PRESSGERÄT UND LEITUNGSELEMENT**

(30) Priorität: 05.06.2020 DE 102020115060
(71) Anmelder: Joiner's Bench GmbH, 42859 Remscheid (DE)
(72) Erfinder: SGARRA, Luciano, 42929 Wermelskirchen (DE)
(74) Vertreter: Schwöbel, Thilo K.

(57) **Zusammenfassung**

Es wird ein Verfahren zur Herstellung einer mechanischen Verbindung, insbesondere in Form einer Verpressung, zwischen einem Leitungselement und einem weiteren Leitungselement mittels einer Anordnung umfassend ein Pressgerät und ein Presswerkzeug vorgeschlagen, wobei die Anordnung eine Erfassungseinrichtung aufweist, wobei das Leitungselement wenigstens einen Verbindungsbereich zur Herstellung der mechanischen Verbindung aufweist,
wobei das Leitungselement wenigstens ein Kennzeichnungselement aufweist, umfasst oder mit diesem verbunden ist und wobei das Presswerkzeug wenigstens ein Kennzeichnungselement aufweist, umfasst oder mit diesem verbunden ist, wobei die Kennzeichnungselemente jeweils eine Identifikationsinformation aufweisen oder beinhalten, wobei das Verfahren die folgenden Schritte aufweist:
-- in einem ersten Schritt wird wenigstens eine der Identifikationsinformationen erfasst oder detektiert,
-- in einem zweiten Schritt wird die mechanischen Verbindung des Leitungselements mit dem weiteren Leitungselement hergestellt, insbesondere nur dann hergestellt, wenn wenigstens eine der Identifikationsinformationen erfasst oder erkannt wurde. Ferner wird ein Leitungselement mit wenigstens einem Verbindungsbereich vorgeschlagen, wobei der Verbindungsbereich zur Herstellung einer mechanischen Verbindung, insbesondere in Form einer Verpressung, des Leitungselements mit einem weiteren Leitungselement vorgesehen ist, wobei das Leitungselement wenigstens ein Kennzeichnungselement aufweist, umfasst oder mit diesem verbunden ist, wobei das Kennzeichnungselement eine Identifikationsinformation aufweist oder beinhaltet und wobei das Leitungselement und das Kennzeichnungselement derart konfiguriert sind, dass die Herstellung der mechanischen Verbindung des Leitungselements mit dem weiteren Leitungselement das Erfassen oder die Detektion der Identifikationsinformation erfordert oder voraussetzt.

## Beschreibung

### Stand der Technik

Die Erfindung betrifft ein Leitungselement, ein Pressgerät, ein Presswerkzeug, eine Erfassungseinrichtung für ein Pressgerät sowie ein Verfahren zur Herstellung einer Verbindung.

Bei der mechanischen Verbindung eines Leitungselements, d.h. insbesondere eines Rohrelements oder auch eines Kabelelements, mit einem weiteren Leitungselement (häufig in Form eines Fittings und insbesondere umfassend eine Muffe) ist es erforderlich, dass die Verbindung sicher und dauerhaft hergestellt wird.

Hierzu sind Werkzeuge, insbesondere Presswerkzeuge, bekannt, welche insbesondere mit hydraulischen Pressgeräten betätigt werden.

Häufig muss jedoch nicht nur sichergestellt werden, dass die herzustellenden Verbindungen sicher und dauerhaft hergestellt sind, sondern es muss darüber hinaus auch ein überprüfbarer bzw. belegbarer Nachweis über die hergestellte Verbindung und/oder über die verwendeten Materialien bzw. Leitungselemente geführt werden können.

Häufig ist es ferner möglich, dass eine Mehrzahl von Werkzeugen oder Presswerkzeugen grundsätzlich in Frage kommen, um (in Verbindung oder unter Benutzung eines bestimmten Pressgeräts) eine bestimmte herzustellende Verbindung auszuführen bzw. zu erzeugen. Aus diesem Grund ist ferner - alternativ oder kumulativ zu einem überprüfbaren bzw. belegbaren Nachweis über die hergestellte Verbindung und/oder über die verwendeten Materialien bzw. Leitungselemente - sicherzustellen, dass ein bestimmtes oder eine bestimmte Art oder Typ von Werkzeug oder Presswerkzeug zur Herstellung einer bestimmten Verbindung verwendet wurde.

### Offenbarung der Erfindung

Der Erfindung liegt die Aufgabe zugrunde, ein Leitungselement, ein Pressgerät, ein Presswerkzeug, eine Erfassungseinrichtung für ein Pressgerät sowie ein Verfahren zur Herstellung einer Verbindung zu schaffen, bei dem die Nachteile des Standes der Technik behoben werden, so dass nicht nur insbesondere eine Zuordnung und Speicherung (und damit die Möglichkeit des Führens eines Nachweises) der bei der Herstellung der Verbindung verwendeten Materialien bzw. Leitungselemente bzw. ihrer Art möglich ist, sondern darüber hinaus auch sichergestellt ist, dass ohne eine solche Erfassung bzw. Detektion der verwendeten Materialien bzw. Leitungselemente bzw. ihrer Art die Herstellung der Verbindung gar nicht möglich ist oder nur unter Inkaufnahme einer Hinweismeldung oder eines Warnhinweises. Ferner liegt der Erfindung ebenfalls die Aufgabe zugrunde, ein Verfahren zur Herstellung einer Verbindung, ein Pressgerät, ein Presswerkzeug sowie eine Erfassungseinrichtung für ein Pressgerät zu schaffen, bei dem die Nachteile des Standes der Technik behoben werden, so dass - alternativ oder kumulativ dazu, dass ohne eine solche Erfassung bzw. Detektion der verwendeten Materialien bzw. Leitungselemente bzw. ihrer Art die Herstellung der Verbindung gar nicht möglich ist oder nur unter Inkaufnahme einer Hinweismeldung oder eines Warnhinweises - (insbesondere zeitlich vor der tatsächlichen Herstellung einer bestimmten Verbindung) sichergestellt ist, dass ein bestimmtes oder eine bestimmte Art oder ein Typ von Werkzeug oder Presswerkzeug zur Herstellung der bestimmten Verbindung verwendet wird (und somit ebenfalls gewährleistet werden kann, dass die Herstellung der bestimmten Verbindung ohne die Erkennung des bestimmten oder der bestimmten Art oder des Typs von Werkzeug oder Presswerkzeug gar nicht möglich ist oder nur unter Inkaufnahme einer Hinweismeldung oder eines Warnhinweises) oder dass zumindest sichergestellt ist, dass jedenfalls zeitlich nach der Herstellung der bestimmten Verbindung erkannt oder belegt werden kann, dass ein bestimmtes oder eine bestimmte Art oder ein Typ von Werkzeug oder Presswerkzeug zur Herstellung der bestimmten Verbindung verwendet wurde.

Erfindungsgemäß wird die Aufgabe durch ein Verfahren zur Herstellung einer mechanischen Verbindung gelöst, insbesondere in Form einer Verpressung, zwischen einem Leitungselement und einem weiteren Leitungselement mittels einer Anordnung umfassend ein Pressgerät und ein Presswerkzeug, wobei die Anordnung eine Erfassungseinrichtung aufweist, wobei das Leitungselement wenigstens einen Verbindungsbereich zur Herstellung der mechanischen Verbindung aufweist,
wobei das Leitungselement wenigstens ein Kennzeichnungselement aufweist, umfasst oder mit diesem verbunden ist und wobei das Presswerkzeug wenigstens ein Kennzeichnungselement aufweist, umfasst oder mit diesem verbunden ist, wobei die Kennzeichnungselemente jeweils eine Identifikationsinformation aufweisen oder beinhalten, wobei das Verfahren die folgenden Schritte aufweist:
-- in einem ersten Schritt wird wenigstens eine der Identifikationsinformationen erfasst oder detektiert,
-- in einem zweiten Schritt wird die mechanischen Verbindung des Leitungselements mit dem weiteren Leitungselement hergestellt, insbesondere nur dann hergestellt, wenn wenigstens eine der Identifikationsinformationen erfasst oder erkannt wurde.

Hierdurch ist es erfindungsgemäß vorteilhaft möglich, dass sichergestellt ist oder sichergestellt werden kann, dass ohne die Erfassung bzw. Detektion wenigstens einer Identifikationsinformation - entweder der Identifikationsinformation (des Kennzeichnungselements) des Presswerkzeugs oder aber (des Kennzeichnungselements) des Leitungselements - (oder aber dass ohne die Erfassung bzw. Detektion sowohl der Identifikationsinformationen (des Kennzeichnungselements) des Presswerkzeugs als auch (des Kennzeichnungselements) des Leitungselements) die Herstellung der Verbindung nicht möglich ist (oder nur unter Inkaufnahme einer Hinweismeldung oder eines Warnhinweises), d.h. es ist gesichert bzw. gewährleistet, dass die Erfassung bzw. Detektion von wenigstens einer dieser beiden Identifikationsinformationen erfolgt ist bzw. durchgeführt wurde, bevor (d.h. zeitlich bevor) die mechanische Verbindung des Leitungselements mit dem weiteren Leitungselement (insbesondere des Verbindungsbereichs des Leitungselements mit dem weiteren Verbindungsbereich des weiteren Leitungselements) erfolgte bzw. erfolgt ist.

Erfindungsgemäß ist somit auch eine Ausführungsvariante möglich, bei der lediglich die Identifikationsinformation des Presswerkzeugs (bzw. lediglich die Identifikationsinformation des Kennzeichnungselements des Presswerkzeugs) erfasst bzw. detektiert wird als Voraussetzung zu - im zweiten Schritt - der Herstellung der mechanischen Verbindung (des Leitungselements mit dem weiteren Leitungselement) oder aber als Voraussetzung zur Inbetriebnahme bzw. Aktivierung des Pressgeräts bzw. des Antriebs des Pressgeräts. Es ist hierdurch somit erfindungsgemäß vorteilhaft möglich, dass die Erfassung bzw. Detektion der Identifikationsinformation des Presswerkzeugs bzw. des Kennzeichnungselements des Presswerkzeugs als Voraussetzung - insbesondere als alleinige Voraussetzung - für die Herstellung der Verbindung (des Leitungselements mit dem weiteren Leitungselement) oder aber als Voraussetzung - insbesondere als alleinige Voraussetzung - für die Betätigung des Pressgeräts (d.h. insbesondere für die Einleitung eines oder des Kraftaufbaus zur Herstellung der mechanischen Verbindung) herangezogen wird, d.h. es wird mittels dieser Erfassung bzw. Detektion geprüft, ob die zu erfassende oder zu detektierende Identifikationsinformation des Presswerkzeugs bzw. Identifikationsinformation des Kennzeichnungselements des Presswerkzeugs richtig und vollständig erfasst wurde.

Ferner ist erfindungsgemäß somit auch eine Ausführungsvariante möglich und bevorzugt, bei der sowohl die Identifikationsinformation des Presswerkzeugs (bzw. die Identifikationsinformation des Kennzeichnungselements des Presswerkzeugs) als auch die Identifikationsinformation des Leitungselements (bzw. die Identifikationsinformation des Kennzeichnungselements des Leitungselements) erfasst bzw. detektiert wird als Voraussetzung zu - im zweiten Schritt - der Herstellung der mechanischen Verbindung (des Leitungselements mit dem weiteren Leitungselement) oder aber als Voraussetzung zur Inbetriebnahme bzw. Aktivierung des Pressgeräts bzw. des Antriebs des Pressgeräts. Es ist hierdurch somit erfindungsgemäß vorteilhaft möglich, dass die Erfassung bzw. Detektion dieser beider Identifikationsinformationen (d.h. sowohl der Identifikationsinformation des Presswerkzeugs bzw. des Kennzeichnungselements des Presswerkzeugs als auch der Identifikationsinformation des Leitungselements bzw. des Kennzeichnungselements des Leitungselements) als Voraussetzung für die Herstellung der Verbindung (des Leitungselements mit dem weiteren Leitungselement) oder aber als Voraussetzung für die Betätigung des Pressgeräts (d.h. insbesondere für die Einleitung eines oder des Kraftaufbaus zur Herstellung der mechanischen Verbindung) herangezogen wird, d.h. es wird mittels dieser Erfassung bzw. Detektion geprüft, ob die zu erfassende oder zu detektierende Identifikationsinformationen sowohl des Presswerkzeugs als auch des Leitungselements bzw. Identifikationsinformationen der Kennzeichnungselemente sowohl des Presswerkzeugs als auch des Leitungselements richtig und vollständig erfasst wurde.

Insbesondere ist es erfindungsgemäß bevorzugt und in vorteilhafter Weise vorgesehen, dass zeitlich nach der Erfassung oder Detektion der Identifikationsinformation oder Identifikationsinformationen und (zeitlich) vor der Herstellung der mechanischen Verbindung oder (zeitlich) vor der Einleitung des Kraftaufbaus zur Herstellung der mechanischen Verbindung geprüft wird, ob die jeweils zu erfassende oder zu detektierende Identifikationsinformation oder Identifikationsinformationen richtig und vollständig erfasst wurde oder wurden. Falls das Ergebnis dieser Prüfung auf eine richtige und vollständige Erfassung oder Detektion hindeutet, wird ein Freigabesignal oder eine Freigabeinformation erzeugt bzw. übertragen, welches oder welche die Voraussetzung ist für die eigentliche Herstellung der mechanischen Verbindung bzw. auch für die Einleitung (insbesondere des Kraftaufbaus) für die Herstellung der mechanischen Verbindung. Die Durchführung der Prüfung und die Generierung bzw. Übertragung des Freigabesignals bzw. der Freigabeinformation erfolgt erfindungsgemäß entweder in oder durch die Erfassungseinrichtung 550 oder aber im oder durch das Pressgerät 510, d.h. insbesondere durch eine Steuereinrichtung als Teil des Pressgeräts 510, wobei die Steuereinrichtung das Freigabesignal oder die Freigabeinformation erzeugt (bzw. das Pressgerät 510 bzw. dessen Aktuator derart ansteuert, dass der Kraftaufbau eingeleitet wird und/oder die Herstellung der mechanischen Verbindung bewirkt wird).

Erfindungsgemäß ist es ferner bevorzugt und in vorteilhafter Weise vorgesehen, dass die Anordnung umfassend das Pressgerät und das Presswerkzeug die Erfassungseinrichtung derart aufweist, dass die Anordnung umfassend das Pressgerät und das Presswerkzeug wenigstens zwei Erfassungselemente oder Sensoren aufweist, wobei ein erstes Erfassungselement oder ein erster Sensor zur Erfassung oder Detektion der Identifikationsinformation des Presswerkzeugs und wobei ein zweites Erfassungselement oder ein zweiter Sensor zur Erfassung oder Detektion der Identifikationsinformation des Leitungselements vorgesehen ist. Dadurch ist es erfindungsgemäß vorteilhaft möglich, dass im ersten Schritt entweder zunächst die Erfassung oder Detektion der Identifikationsinformation des Presswerkzeugs und anschließend die Erfassung oder Detektion der Identifikationsinformation des Leitungselements erfolgt oder umgekehrt, oder aber, dass gleichzeitig oder zumindest teilweise gleichzeitig die Erfassung oder Detektion der Identifikationsinformation des Leitungselements und die Erfassung oder Detektion der Identifikationsinformation des Presswerkzeugs erfolgt. Hierdurch ist es erfindungsgemäß vorteilhaft möglich, dass bestimmte Abfragelogiken angewandt werden, beispielsweise, dass auch geprüft wird, ob die Identifikationsinformationen von Presswerkzeug Leitungselement zueinander passen.

Erfindungsgemäß ist es ferner bevorzugt und in vorteilhafter Weise vorgesehen, dass die Kennzeichnungselemente jeweils in Form eines optisch erkennbaren Aufdrucks oder Labels oder einer optisch erkennbaren Oberfläche ausgebildet sind und dass die Erfassung oder die Detektion der Identifikationsinformation oder der Identifikationsinformationen durch jeweils optische Erfassung des Kennzeichnungselements oder der Kennzeichnungselemente erfolgt, insbesondere durch optische Detektion einer Farbe oder einer Mehrzahl von Farben oder einer Mehrzahl angeordneter Farbflächen, wobei insbesondere zur Erfassung oder Detektion der Identifikationsinformation oder der Identifikationsinformationen eine Bestrahlung oder Beleuchtung des Bereichs des jeweiligen Kennzeichnungselements mit einer entsprechenden elektromagnetischen Strahlung erfolgt.

Hierdurch ist es erfindungsgemäß in besonders einfacher und robuster Weise möglich, die Identifikationsinformation oder die Mehrzahl an Identifikationsinformationen zu erfassen bzw. zu detektieren.

Ein weiterer Gegenstand der vorliegenden Erfindung betrifft ein Pressgerät, insbesondere elektrohydraulisches Pressgerät, zur Herstellung einer Verbindung zwischen einem Leitungselement und einem weiteren Leitungselement oder zwischen dem Leitungselement und einem dritten Leitungselement, wobei das Pressgerät einen Antrieb zum Bewegen eines Presswerkzeugs umfasst, wobei das Leitungselement wenigstens ein Kennzeichnungselement aufweist, umfasst oder mit diesem verbunden ist und wobei das Presswerkzeug wenigstens ein Kennzeichnungselement aufweist, umfasst oder mit diesem verbunden ist, wobei die Kennzeichnungselemente jeweils eine Identifikationsinformation aufweisen oder beinhalten, wobei die Anordnung aus Pressgerät und Presswerkzeug eine Erfassungseinrichtung zur Erfassung von wenigstens einer der Identifikationsinformationen der Kennzeichnungselemente aufweist, umfasst oder mit dieser verbunden ist,
wobei insbesondere das Pressgerät die Erfassungseinrichtung umfasst,
wobei die Anordnung aus Pressgerät und Presswerkzeug und die Erfassungseinrichtung derart konfiguriert sind, dass die Herstellung der mechanischen Verbindung des Leitungselements mit dem weiteren Leitungselement das Erfassen oder die Detektion von wenigstens einer der Identifikationsinformationen erfordert oder voraussetzt.

Weitere Gegenstände der vorliegenden Erfindung betreffen
-- ein Presswerkzeug für ein erfindungsgemäßes Pressgerät, wobei das Presswerkzeug eine Erfassungseinrichtung und/oder ein Kennzeichnungselement aufweist,
-- sowie eine (separate) Erfassungseinrichtung für ein erfindungsgemäßes Pressgerät oder für ein erfindungsgemäßes Presswerkzeug.

Die Aufgabe wird erfindungsgemäß ferner auch durch ein Leitungselement mit wenigstens einem Verbindungsbereich gelöst, wobei der Verbindungsbereich zur Herstellung einer mechanischen Verbindung, insbesondere in Form einer Verpressung, des Leitungselements mit einem weiteren Leitungselement vorgesehen ist, wobei das Leitungselement wenigstens ein Kennzeichnungselement aufweist, umfasst oder mit diesem verbunden ist, wobei das Kennzeichnungselement eine Identifikationsinformation aufweist oder beinhaltet und wobei das Leitungselement und das Kennzeichnungselement derart konfiguriert sind, dass die Herstellung der mechanischen Verbindung des Leitungselements mit dem weiteren Leitungselement das Erfassen oder die Detektion der Identifikationsinformation erfordert oder voraussetzt.

Hierdurch ist es erfindungsgemäß vorteilhaft möglich, dass sichergestellt ist, dass ohne die Erfassung bzw. Detektion der verwendeten Materialien bzw. der Art der Materialien bzw. der Leitungselemente bzw. der Art der Leitungselemente die Herstellung der Verbindung nicht möglich ist (oder nur unter Inkaufnahme einer Hinweismeldung oder eines Warnhinweises), d.h. es ist gesichert bzw. gewährleistet, dass die Erfassung bzw. Detektion der Identifikationsinformation -jedenfalls bezogen auf das Leitungselement, insbesondere bezogen auf das ganze Leitungselement (sofern die Identifikationsinformation das ganze oder gesamte Leitungselement bezeichnet) oder aber bezogen auf lediglich den Verbindungsbereich des Leitungselements - erfolgt ist bzw. durchgeführt wurde, bevor (d.h. zeitlich bevor) die mechanische Verbindung des Leitungselements mit dem weiteren Leitungselement (insbesondere des Verbindungsbereichs des Leitungselements mit dem weiteren Verbindungsbereich des weiteren Leitungselements) erfolgte bzw. erfolgt ist.

Es ist hierdurch erfindungsgemäß vorteilhaft möglich, dass die Erfassung bzw. Detektion - insbesondere die Identifizierung des Leitungselements - zeitlich vor der Herstellung der Verbindung mit dem weiteren Leitungselement erfolgt und insbesondere, dass die Herstellung dieser Verbindung gar nicht möglich ist (oder nur unter Inkaufnahme einer Hinweismeldung oder eines Warnhinweises), bevor die Erfassung bzw. die Detektion bzw. die Identifizierung zumindest der Identifikationsinformation (des Leitungselements) erfolgt ist.

Die Herstellung der Verbindung erfolgt erfindungsgemäß insbesondere dadurch, dass eine Verpressung erfolgt - d.h. insbesondere umfassend eine plastische Verformung (oder bestehend aus einer plastischen Verformung), ggf. auch durch Temperatureinwirkung auf ein thermoplastisches Material, insbesondere bei einem Kabelelement als Leitungselement - insbesondere durch die Betätigung eines Geräts zur mechanischen, insbesondere hydraulisch unterstützten, Herstellung der Verbindung, d.h. eines Pressgeräts. Insbesondere wird somit erfindungsgemäß voraussetzt, dass die Identifikationsinformation des Kennzeichnungselements des verwendeten Leitungselements vor oder jedenfalls bei der Herstellung bzw. vor der vollständigen Herstellung bzw. Fertigstellung von dessen mechanischer Verbindung mit dem weiteren Leitungselement erfasst bzw. detektiert wird.

Durch die Erfindung ist es in vorteilhafter Weise möglich, dass die Erfassung bzw. Detektion jedenfalls der Identifikationsinformation (des Leitungselements) bei der Herstellung der mechanischen Verbindung bzw. im Zuge der Herstellung der mechanischen Verbindung erfolgt. Insbesondere ist es erfindungsgemäß bevorzugt möglich, dass ein Sensorelement bzw. ein Leseelement bzw. eine Erfassungseinrichtung zur Erfassung der Identifikationsinformation des Kennzeichnungselements vorgesehen ist, welches (bzw. welche) entweder vom Pressgerät oder Presswerkzeug separat vorgesehen ist oder aber in des Pressgerät bzw. auch das Presswerkzeug integriert bzw. damit verbunden vorgesehen ist. Hierdurch ist es erfindungsgemäß vorteilhaft möglich, dass entweder kein zusätzlicher Zeitaufwand für die Erfassung bzw. Detektion von wenigstens der Identifikationsinformation (des Leitungselements) erforderlich ist oder aber sich der zusätzliche Zeitaufwand für die Erfassung bzw. Detektion von wenigstens der Identifikationsinformation in Grenzen hält.

Gemäß einer bevorzugten Ausführungsform der Erfindung ist es vorgesehen, dass das weitere Leitungselement wenigstens ein weiteres Kennzeichnungselement insbesondere in wenigstens einem weiteren Verbindungsbereich aufweist, umfasst oder mit diesem verbunden ist, wobei das weitere Kennzeichnungselement eine weitere Identifikationsinformation aufweist oder beinhaltet und wobei das Leitungselement und das weitere Kennzeichnungselement derart konfiguriert sind, dass die Herstellung der mechanischen Verbindung des Leitungselements mit dem weiteren Leitungselement das Erfassen oder die Detektion auch der weiteren Identifikationsinformation erfordert oder voraussetzt.

Hierdurch ist es somit in vorteilhafter Weise möglich, dass beide miteinander zu verbindende Elemente - das Leitungselement und das weitere Leitungselement -jeweils ein Kennzeichnungselement aufweisen (das Kennzeichnungselement beim Leitungselement und das weitere Kennzeichnungselement beim weiteren Leitungselement) und dass ferner beide Kennzeichnungselemente jeweils eine Identifikationsinformation (die Identifikationsinformation beim Kennzeichnungselement und die weitere Identifikationsinformation beim weiteren Kennzeichnungselement) aufweisen, wobei die Herstellung der mechanischen Verbindung des Leitungselements mit dem weiteren Leitungselement das Erfassen oder die Detektion sowohl der Identifikationsinformation als auch der weiteren Identifikationsinformation erfordert oder voraussetzt. Es ist somit erfindungsgemäß möglich, dass - beidseitig der Verbindung - etwa die Art der bei der Herstellung der Verbindung verwendeten Materialien bzw. Leitungselemente der Verbindung zugeordnet und verifizierbar belegt werden kann. Insbesondere ist es somit erfindungsgemäß möglich, dass beide zu verbindenden Leitungselemente durch ihre jeweilige Identifikationsinformation identifizierbar sind. Insbesondere für den Fall, dass eines der zu verbindenden Leitungselemente ein solches Leitungselement ist, welches normalerweise als Meterware verwendet wird, d.h. ohne einen im Vorhinein bereits explizit positionierten Verbindungsbereich (bzw. ohne eine Mehrzahl von im Vorhinein bereits explizit positionierte Verbindungsbereiche), mag es ausreichend sein, das Leitungselement an sich anhand seiner Identifikationsinformation zu identifizieren. Der erfindungsgemäße Verbindungsbereich wird bei einem solchen (als Meterware konzipierten) Leitungselement in der Regel dadurch realisiert, dass in einem Endbereich (des Leitungselements) ein Überlapp mit dem weiteren Verbindungsbereich des weiteren Leitungselements vorgesehen ist (und anschließend die Verpressung bzw. Herstellung der Verbindung vorgenommen wird).

Gemäß einer weiteren bevorzugten Ausführungsform der Erfindung ist es vorgesehen, dass das Leitungselement - zusätzlich zu dem Verbindungsbereich - einen zusätzlichen Verbindungsbereich aufweist, wobei der zusätzliche Verbindungsbereich des Leitungselements zur Herstellung einer mechanischen Verbindung, insbesondere in Form einer Verpressung, des Leitungselements mit einem dritten Leitungselement vorgesehen ist, wobei insbesondere das dritte Leitungselement wenigstens ein drittes Kennzeichnungselement aufweist, umfasst oder mit diesem verbunden ist, wobei das dritte Kennzeichnungselement eine dritte Identifikationsinformation aufweist oder beinhaltet und wobei das Leitungselement und das dritte Kennzeichnungselement derart konfiguriert sind, dass die Herstellung der mechanischen Verbindung des Leitungselements mit dem dritten Leitungselement das Erfassen oder die Detektion auch der dritten Identifikationsinformation erfordert oder voraussetzt, wobei insbesondere das Leitungselement - zusätzlich zu dem Kennzeichnungselement - ein zusätzliches Kennzeichnungselement aufweist, umfasst oder mit diesem verbunden ist, wobei das zusätzliche Kennzeichnungselement eine zusätzliche Identifikationsinformation aufweist oder beinhaltet und wobei das Leitungselement und das dritte Kennzeichnungselement derart konfiguriert sind, dass die Herstellung der mechanischen Verbindung des Leitungselements mit dem dritten Leitungselement das Erfassen oder die Detektion auch der zusätzlichen Identifikationsinformation erfordert oder voraussetzt.

Hierdurch ist es in vorteilhafter Weise möglich, dass - hinsichtlich des Leitungselements - nicht nur der Verbindungsbereich (zur Verbindung mit dem weiteren Leitungselement), sondern auch der zusätzliche Verbindungsbereich (zur Verbindung mit dem dritten Leitungselement) eindeutig durch die jeweilige Identifikationsinformation identifizierbar ist. Bei einem Leitungselement mit wenigstens zwei Verbindungsbereiche, wie etwa einer Muffe, oder auch einem Leitungselement mit wenigstens drei Verbindungsbereiche, wie etwa einem T-Stück, ist es somit erfindungsgemäß möglich, beide bzw. alle Verbindungsbereiche voneinander unterscheidbar mit jeweils einer Identifikationsinformation zu identifizieren. Hierbei identifiziert das Kennzeichnungselement (bzw. die dazu korrespondierende Identifikationsinformation) den Verbindungsbereich des Leitungselements und das zusätzliche Kennzeichnungselement (bzw. die korrespondierende zusätzliche Identifikationsinformation) den zusätzlichen Verbindungsbereich des Leitungselements. Nachfolgend wird der Einfachheit halber auch von einem ersten Verbindungsbereich des (ersten) Leitungselements zur Verbindung mit dem weiteren Leitungselement (über dessen weiteren (bzw. vierten) Verbindungsbereich) gesprochen. Ferner wird auch von dem zusätzlichen Verbindungsbereich (des (ersten) Leitungselements) als von einem zweiten Verbindungsbereich zur Verbindung mit dem dritten Leitungselement (über dessen dritten Verbindungsbereich) gesprochen. Insbesondere ist es erfindungsgemäß vorgesehen, dass jedem der Verbindungsbereiche - also insbesondere dem ersten und zweiten Verbindungsbereich des (ersten) Leitungselements - ein Kennzeichnungselement mit jeweils einer Identifikationsinformation zugeordnet ist, d.h. die hergestellte Verbindung zwischen dem (ersten) Leitungselement und dem weiteren (vierten) Leitungselement wird durch sowohl die (erste) Identifikationsinformation als auch die weitere (vierte) Identifikationsinformation repräsentiert bzw. überprüfbar validiert und die hergestellte Verbindung zwischen dem (ersten) Leitungselement und dem dritten Leitungselement wird durch sowohl die zusätzliche (zweite) Identifikationsinformation als auch die dritte Identifikationsinformation repräsentiert bzw. überprüfbar validiert.

Gemäß der vorliegenden Erfindung ist es ferner bevorzugt, dass das Leitungselement ein Rohrelement ist, vorgesehen zur Verbindung mit einem weiteren Rohrelement als weiteres Leitungselement, oder dass das Leitungselement ein Kabelelement ist, vorgesehen zur Verbindung mit einem weiteren Kabelelement als weiteres Leitungselement. Insgesamt ist somit das (erste) Leitungselement und das weitere (bzw. vierte) Leitungselement bzw. auch das dritte Leitungselement) entweder als ein Rohrelement oder als eine Kabelelement vorgesehen. Unter dem Begriff Rohrelement wird hierbei beispielsweise ein gerades oder gebogenes Rohr, ein gerader oder gebogener Rohrabschnitt oder ein Abschnitt eines verzweigten Rohres, beispielsweise eines T-Stücks, verstanden. Vorzugsweise handelt es sich bei einem solchen Rohrelement als Leitungselement um ein Mehrschichtverbundrohr, vorzugsweise um ein Mehrschichtverbundrohr mit einem Kern oder einer Kernschicht aus einem Aluminiummaterial, insbesondere einer Aluminiumlegierung, und mit einer radial inneren und einer radial äußeren Schicht oder Lage aus einem Kunststoffmaterial. Jedoch sind auch Kupferrohre, Stahlrohre oder Edelstahlrohre oder entsprechende Rohrelemente als Leitungselemente erfindungsgemäß verwendbar. In der Regel wird es so sein, dass im Wesentlichen gleichartige oder zumindest von der Materialpaarung zusammenpassende Leitungselemente bzw. Rohrelemente mittels ihrer jeweiligen Verbindungsbereiche miteinander verbunden werden, so dass insbesondere druckdichte, insbesondere flüssigkeitsdichte oder auch gasdichte Verbindungen zwischen den Leitungselementen hergestellt werden können. Auch Rohrelemente aus anderen als den genannten Metallen oder aus weiteren Metalllegierungen bzw. solche, welche solche anderen Metall oder Metalllegierungen aufweisen, sind erfindungsgemäß bevorzugt vorgesehen. Insbesondere sind im Rahmen der vorliegenden Erfindung als Rohrelemente bzw. als Leitungselemente sogenannte Fittinge vorgesehen. Unter dem Begriff Fitting wird hierbei allgemein ein Verbindungsstück einer Rohrleitung bzw. zwischen zwei Rohrelementen bezeichnet, beispielsweise ein gerades Verbindungsstück, ein Richtungswechselstück, ein Durchmesserwechselstück, ein Abzweigstück wie beispielsweise ein T-Stück oder eine Kreuzung, ein Verbindungsstück zu Einbauteilen oder Verbindungsstücke verschiedener Rohrmaterialien. Unter dem Begriff Muffe wird hierbei allgemein ein Bauelement zur unterbrechungsfreien Verbindung zweier Rohre bezeichnet. Insbesondere ist es erfindungsgemäß bevorzugt vorgesehen, dass das Leitungselement ein Fitting oder ein Rohr oder ein Kabel ist.

Gemäß weiterer Ausführungsformen ist es erfindungsgemäß vorgesehen, dass das (erste) Kennzeichnungselement und/oder das weitere (bzw. vierte) Kennzeichnungselement und/oder das dritte Kennzeichnungselement und/oder das zusätzliche (bzw. zweite) Kennzeichnungselement in Form wenigstens eines der nachfolgenden Kennzeichnungselemente realisiert ist:
-- in Form eines optisch erkennbaren Aufdrucks oder Labels - insbesondere als Barcode oder QR-Code -, positioniert in einem Bereich der äußeren oder inneren Oberfläche des (ersten) Leitungselements oder des weiteren (vierten) Leitungselements oder des dritten Leitungselements, insbesondere im oder in räumlicher Nähe des jeweiligen Verbindungsbereichs, d.h. des (ersten) Verbindungsbereichs oder des weiteren (bzw. vierten) Verbindungsbereichs oder des dritten Verbindungsbereichs oder des zusätzlichen (bzw. zweiten) Verbindungsbereichs,
-- in Form eines elektromagnetisch auslesbaren Transponderelements oder RFID-Tag-Elements, positioniert in einem Bereich der äußeren oder inneren Oberfläche des (ersten) Leitungselements oder des weiteren (bzw. vierten) Leitungseleements, insbesondere im oder in räumlicher Nähe des jeweiligen Verbindungsbereichs, d.h. des (ersten) Verbindungsbereichs oder des weiteren (bzw. vierten) Verbindungsbereichs oder des dritten Verbindungsbereichs oder des zusätzlichen (bzw. zweiten) Verbindungsbereichs.

Es ist hierdurch erfindungsgemäß in einfacher Weise und vergleichsweise zeit- und kostensparend möglich, dass für die oder im Zuge der Herstellung der mechanischen Verbindung des (ersten) Leitungselements mit dem weiteren (vierten) Leitungselement bzw. mit dem dritten Leitungselement das Erfassen oder die Detektion der jeweiligen Identifikationsinformation durchgeführt wird und dies insbesondere auch in schwierigen, etwa weil platzbeengten und/oder staub- oder schmutzbelasteten Montagesituationen. Bei der Realisierung der Kennzeichnungselemente in Form eines optisch erkennbaren Aufdrucks oder Labels findet jedenfalls eine optische Erfassung der jeweiligen Identifikationsinformation statt, ggf. auch unter gleichzeitiger bzw. vorheriger Bestrahlung bzw. Beleuchtung des Bereichs des jeweiligen Kennzeichnungselements mit einer entsprechenden elektromagnetischen Strahlung. Hierzu wird - jedenfalls für die Erfassung, ggf. auch für die Bestrahlung oder Beleuchtung - insbesondere sichtbares Licht (d.h. ein Wellenlängenbereich von ca. 380 nm bis ca. 750 nm) oder Infrarotstrahlung (d.h. ein Wellenlängenbereich von ca. 750 nm bis ca. 3 µm bzw. bis ca. 50 µm, insbesonder IR-A (ca. 780 bis ca. 1400 nm), IR-B (ca. 1400 nm bis ca. 3 µm) oder IR-C (ca 3 µm bis ca. 50 µm)) oder Ultraviolettstrahlung (d.h. ein Wellenlängenbereich von ca. 100 nm bis ca. 380 nm, insbesonder UV-A (ca. 315 bis ca. 380 nm), UV-B (ca. 280 nm bis ca. 315 nm) oder UV-C (ca 100 nm bis ca. 280 nm)) verwendet. Die Kennzeichnungselemente können hier insbesondere in Form eines Aufdrucks auf die Oberfläche des jeweiligen Leitungselements realisiert sein, etwa in Form eines Barcodes oder Strichcodes oder als mehrdimensionaler optischer Code, insbesondere als QR-Code. Insbesondere ist das Kennzeichnungselement (und somit auch die Identifikationsinformation) in einem Bereich der äußeren Oberfläche oder auch im einem Bereich der inneren Oberfläche des jeweiligen Leitungselements und im jeweiligen Verbindungsbereich oder in räumlicher Nähe des jeweiligen Verbindungsbereichs angeordnet bzw. positioniert. Alternativ oder zusätzlich zu einem optisch auslesbaren Kennzeichnungselements (bzw. einem Kennzeichnungselement mit optisch auslesbarer Identifikationsinformation) ist es erfindungsgemäß auch möglich und bevorzugt, dass das Kennzeichnungselement als in Form eines elektromagnetisch auslesbaren Transponderelements oder RFID-Tag-Elements vorgesehen ist. Es ist erfindungsgemäß insbesondere auch möglich und bevorzugt, dass ein Kennzeichnungselement einer ersten Art (etwa ein optisch auslesbares Kennzeichnungselement) im Verbindungsbereich oder in der Nähe eines Verbindungsbereichs einer ersten Art (etwa ein Verbindungsbereich, welcher den durchmesserkleineren Partner einer Materialüberlappung zur Verbindung bzw. Verpressung bildet) vorgesehen ist, während ein Kennzeichnungselement einer zweiten Art (etwa ein elektromagnetisch auslesbares Kennzeichnungselement) im Verbindungsbereich oder in der Nähe eines Verbindungsbereichs einer zweiten Art (etwa ein Verbindungsbereich, welcher den durchmessergrößeren Partner einer Materialüberlappung zur Verbindung bzw. Verpressung bildet) vorgesehen ist; die umgekehrte Fallkonstellation ist natürlich ebenfalls denkbar und erfindungsgemäß vorgesehen.

Gemäß einer weiteren Ausführungsform ist es erfindungsgemäß vorgesehen, dass die Identifikationsinformation das (erste) Leitungselement oder den (ersten) Verbindungsbereich des (ersten) Leitungselements identifiziert, insbesondere eindeutig und individualisiert identifiziert, und/oder dass die weitere (bzw. vierte) Identifikationsinformation das weitere (bzw. vierte) Leitungselement identifiziert, insbesondere eindeutig und individualisiert identifiziert, und/oder dass die dritte Identifikationsinformation das dritte Leitungselement identifiziert, insbesondere eindeutig und individualisiert identifiziert, und/oder dass die zusätzliche (bzw. zweite) Identifikationsinformation das (erste) Leitungselement oder den zusätzlichen (bzw. zweiten) Verbindungsbereich des (ersten) Leitungselements identifiziert, insbesondere eindeutig und individualisiert identifiziert. Hierbei ist es erfindungsgemäß insbesondere bevorzugt vorgesehen, dass diese Identifizierung oder individuelle Identifizierung eine Materialinformation des jeweiligen Leitungselements oder des jeweiligen Verbindungsbereichs des Leitungselements umfasst.

Es ist hierdurch erfindungsgemäß insbesondere vorteilhaft möglich, dass nicht nur die ordnungsgemäße Herstellung der jeweiligen Verbindungen (etwa über entsprechende Parameter bzw. Protokolle bzw. Log-Informationen, die während des Verpressvorgangs erzeugt bzw. hergestellt werden) überprüfbar gewährleistet werden kann, sondern auch überprüfbar gewährleistet werden kann, dass hierbei die richtigen - im Sinne von zueinander passenden bzw. sich nicht gegenseitig ausschließenden bzw. miteinander kombinierbaren - Leitungselemente bzw. deren Verbindungsbereiche miteinander verbunden werden bzw. wurden.

Gemäß einer weiteren Ausführungsform ist es erfindungsgemäß vorgesehen, dass die Herstellung der mechanischen Verbindung des (ersten) Leitungselements mit dem weiteren (bzw. vierten) Leitungselement das (erste) Kennzeichnungselement und/oder das weitere (bzw. vierte) Kennzeichnungselement zumindest teilweise zerstört und/oder dass die Herstellung der mechanischen Verbindung des (ersten) Leitungselements mit dem dritten Leitungselement das dritte Kennzeichnungselement und/oder das zusätzliche (bzw. zweite) Kennzeichnungselement zumindest teilweise zerstört.

Es ist hierdurch erfindungsgemäß vorteilhaft möglich, dass eine nachträgliche Erfassung bzw. Detektion der relevanten Kennzeichnungselemente bzw. deren Identifikationsinformation(en) nicht mehr möglich ist, so dass sichergestellt werden kann, dass es sich bei der Erfassung bzw. Detektion der jeweiligen Identifikationsinformationen um solcher Erfassungsprozesse oder Detektionsprozesse handelt (bzw. gehandelt hat) die zeitlich vor der Herstellung der jeweiligen Verbindung durchgeführt wurden oder erfolgten.

Ein weiterer Gegenstand der vorliegenden Erfindung betrifft ein Pressgerät, insbesondere ein elektrohydraulisches Pressgerät, zur Herstellung einer Verbindung zwischen einem (ersten) Leitungselement und einem weiteren (bzw. vierten) Leitungselement oder zwischen dem (ersten) Leitungselement und einem dritten Leitungselement, wobei das Pressgerät einen Antrieb zum Bewegen eines Presswerkzeugs umfasst und wobei die Anordnung aus Pressgerät und Presswerkzeug eine Erfassungseinrichtung zur Erfassung jedenfalls der (ersten) Identifikationsinformation des (ersten) Kennzeichnungselements aufweist, umfasst oder mit dieser verbunden ist, wobei insbesondere das Pressgerät die Erfassungseinrichtung umfasst, wobei die Anordnung aus Pressgerät und Presswerkzeug und die Erfassungseinrichtung derart konfiguriert sind, dass die Herstellung der mechanischen Verbindung des (ersten) Leitungselements mit dem weiteren (vierten) Leitungselement das Erfassen oder die Detektion der (ersten) Identifikationsinformation erfordert oder voraussetzt und/oder wobei die Anordnung aus Pressgerät und Presswerkzeug die Erfassungseinrichtung oder eine weitere Erfassungseinrichtung zur Erfassung der weiteren (bzw. vierten) Identifikationsinformation des weiteren (bzw. vierten) Kennzeichnungselements aufweist, umfasst oder mit dieser verbunden ist, wobei die Anordnung aus Pressgerät und Presswerkzeug und die Erfassungseinrichtung oder die weitere Erfassungseinrichtung derart konfiguriert sind, dass die Herstellung der mechanischen Verbindung des (ersten) Leitungselements mit dem weiteren (bzw. vierten) Leitungselement das Erfassen oder die Detektion der weiteren (bzw. vierten) Identifikationsinformation erfordert oder voraussetzt.

Hierdurch ist es erfindungsgemäß vorteilhaft möglich, dass sichergestellt werden kann, dass ohne eine solche Erfassung bzw. Detektion der verwendeten Materialien bzw. Leitungselemente bzw. ihrer Art die Herstellung der Verbindung nicht möglich ist oder lediglich fehlerbehaftet möglich ist, d.h. es wird ggf. eine Verpressung und damit eine Verbindung hergestellt, im jeweiligen Verpressungsprotokoll jedoch die Information berücksichtigt, dass keine Erfassung oder Detektion der jeweiligen Identifikationsinformation durchgeführt wurde.

Das erfindungsgemäße Pressgerät weist im operativen Einsatz insbesondere ein Presswerkzeug auf. Typischerweise ist das Presswerkzeug hierbei austauschbar vorgesehen, d.h. das gleiche Pressgerät ist in der Lage mit einer Mehrzahl von verschiedenen Presswerkzeugen betrieben zu werden, etwa für die Verpressung (d.h. die Herstellung von Verbindungen) unterschiedlicher Materialien und/oder unterschiedlicher Leitungselemente, insbesondere von unterschiedlichen Durchmessern oder unterschiedlichen Durchmesserbereichen. Erfindungsgemäß ist es jedoch auch möglich und bevorzugt, dass das Pressgerät und das Presswerkzeug als Einheit vorliegen, d.h. das Presswerkzeug ist in diesem Fall mit dem Pressgerät (stärker) verbunden und das Presswerkzeug ist nicht (in einfacher Weise) austauschbar vorgesehen. Auch ein solches, mit dem Presswerkzeug integriertes, Pressgerät wird im Folgenden als "Anordnung aus Pressgerät und Presswerkzeug" angesehen. Erfindungsgemäß findet in einem ersten Schritt eine Erfassung oder eine Detektion der jeweils relevanten Identifikationsinformation (insbesondere der (ersten) Identifikationsinformation des (ersten) Kennzeichnungselements des (ersten) Leitungselements) und in einem zweiten Schritt wird die mechanische Verbindung der jeweils betrachteten Leitungselemente (also insbesondere das (erste) Leitungselement mit dem weiteren (bzw. vierten) Leitungselement oder aber (auf der anderen Seite bzw. am anderen Ende des (ersten) Leitungselements) das (erste) Leitungselement mit dem dritten Leitungselement) hergestellt.

Zur Durchführung des ersten Schritts muss somit die jeweils relevante Identifikationsinformation des jeweils relevanten Kennzeichnungselements "abgelesen" bzw. detektiert oder erfasst werden. Hierzu weist entweder die Anordnung aus Pressgerät und Presswerkzeug eine Erfassungseinrichtung auf oder ist mit dieser verbunden oder zumindest in räumlicher Nähe vorgesehen. Erfindungsgemäß ist gemäß einer ersten Variante die Erfassungseinrichtung Teil des Pressgeräts und nicht Teil des Presswerkzeugs. Dies hat insbesondere die Vorteile, dass verschiedene Presswerkzeuge mit dem gleichen Pressgerät und der gleichen Erfassungseinrichtung verwendbar sind bzw. das Presswerkzeug vergleichsweise kostengünstig herstellbar ist (weil die Erfassungseinrichtung jedenfalls nicht Teil des Presswerkzeugs ist). Gemäß einer zweiten Variante ist die Erfassungseinrichtung umgekehrt nicht Teil des Pressgeräts sondern Teil des Presswerkzeugs. Dies hat insbesondere die Vorteile, dass das gleiche Pressgerät mit unterschiedlichen Presswerkzeugen und ihrer (insbesondere jeweils an das zu verpressende Material bzw. die zu verbindenden Leitungselemente bzw. die jeweils zu erfassenden bzw. zu lesenden Kennzeichnungselemente angepassten) Erfassungseinrichtung verwendbar ist eine optimale Anpassung der Erfassungseinrichtung an die jeweils verwendeten bzw. (auf, an oder in den (Verbindungsbereichen der) Leitungselementen) vorhandenen Kennzeichnungselemente realisiert sein kann bzw. dass das Pressgerät vergleichsweise kostengünstig herstellbar ist (weil die Erfassungseinrichtung jedenfalls nicht Teil des Pressgeräts ist). Gemäß einer dritten Variante ist die Erfassungseinrichtung weder Teil des Pressgeräts noch Teil des Presswerkzeugs, sondern als separate, jedoch beispielsweise verbindbare - etwa am oder auf das Pressgerät und/oder am oder auf das Presswerkzeug aufsteckbare oder ansteckbare - Erfassungseinrichtung vorhanden. Dies hat insbesondere die Vorteile, dass das gleiche Pressgerät und das gleiche Presswerkzeug mit unterschiedlichen (insbesondere jeweils an das zu verpressende Material bzw. die zu verbindenden Leitungselemente bzw. die jeweils zu erfassenden bzw. zu lesenden Kennzeichnungselemente angepassten) Erfassungseinrichtungen verwendbar sind und somit wiederum eine optimale Anpassung der Erfassungseinrichtung an die jeweils verwendeten bzw. (auf, an oder in den (Verbindungsbereichen der) Leitungselementen) vorhandenen Kennzeichnungselemente realisiert sein kann bzw. dass sowohl das Pressgerät als auch das Presswerkzeug vergleichsweise kostengünstig herstellbar sind (weil die Erfassungseinrichtung separat vorliegt).

Gemäß sämtlicher erfindungsgemäßer Varianten ist jedenfalls die Anordnung aus Pressgerät und Presswerkzeug und Erfassungseinrichtung derart konfiguriert, dass die Herstellung der mechanischen Verbindung der beiden betrachteten Leitungselemente (insbesondere des (ersten) Leitungselements mit dem weiteren (vierten) Leitungselement) das Erfassen oder die Detektion der (ersten) Identifikationsinformation erfordert oder voraussetzt. Ferner ist es (ebenfalls gemäß sämtlicher genannten Varianten) insbesondere so, dass die Anordnung aus Pressgerät und Presswerkzeug und Erfassungseinrichtung (oder aber die Anordnung aus Pressgerät und Presswerkzeug, Erfassungseinrichtung und einer weiteren Erfassungseinrichtung) derart konfiguriert ist, dass die Herstellung der mechanischen Verbindung der beiden betrachteten Leitungselemente die Erfassung (zusätzlich zur (ersten) Identifikationsinformation) der weiteren (bzw. vierten) Identifikationsinformation des weiteren (bzw. vierten) Kennzeichnungselements erfordert oder voraussetzt.

Weitere Gegenstände der vorliegenden Erfindung betreffen somit ein Presswerkzeug mit einer Erfassungseinrichtung für ein erfindungsgemäßes Pressgerät sowie eine (separate) Erfassungseinrichtung für ein erfindungsgemäßes Pressgerät oder für ein erfindungsgemäßes Presswerkzeug. Beispiele für solche eine separate Erfassungseinrichtung umfassen, dass die Erfassungseinrichtung als Zusatzkomponente (etwa als Zubehörteil zur dezidierten Verwendung als Erfassungseinrichtung) ausgebildet ist oder aber dass die Erfassungseinrichtung als ein vom Pressgerät und vom Presswerkzeug unabhängiges Gerät, etwa in Form eines Smartphones, eines tragbaren Computers, eines Laptops oder sonstiger Gerät ausgebildet ist. Insbesondere bei der Verwendung einer separaten Erfassungseinrichtung ist es erfindungsgemäß vorgesehen, dass eine Informationsübertragung zwischen der Erfassungseinrichtung einerseits und dem Pressgerät andererseits als Voraussetzung für die Herstellung der mechanischen Verbindung bzw. auch als Voraussetzung der Einleitung (insbesondere des Kraftaufbaus) zur Herstellung der mechanischen Verbindung stattfindet. Bei dieser Informationsübertragung kann es sich entweder im Wesentlichen um die Übertragung (lediglich) der erfassten bzw. detektierten Identifikationsinformation handeln (wobei ein Prüfungsschritt danach, somit also im Pressgerät, stattfindet, wobei die erfolgreiche Durchführung der Prüfung auf eine richtige und vollständige Erfassung oder Detektion der Identifikationsinformation hindeutet, so dass (durch das Pressgerät) ein Freigabesignal oder eine Freigabeinformation erzeugt wird, welches die Voraussetzung ist für die eigentliche Herstellung der mechanischen Verbindung bzw. auch für die Einleitung (insbesondere des Kraftaufbaus) für die Herstellung der mechanischen Verbindung). Gemäß einer alternativen Ausführung handelt es sich bei dieser Informationsübertragung (zwischen der Erfassungseinrichtung einerseits und dem Pressgerät andererseits) um die Übertragung der Freigabeinformation selbst; somit ist es vorgesehen, dass der Prüfungsschritt in der Erfassungseinrichtung erfolgt und somit auch in der Erfassungseinrichtung oder durch die Erfassungseinrichtung die Prüfung auf eine richtige und vollständige Erfassung oder Detektion der Identifikationsinformation erfolgt.

Ein weiterer Gegenstand der vorliegenden Erfindung betrifft ein Verfahren zur Herstellung einer mechanischen Verbindung, insbesondere in Form einer Verpressung, zwischen einem Leitungselement und einem weiteren Leitungselement, wobei das Leitungselement wenigstens einen Verbindungsbereich zur Herstellung der mechanischen Verbindung aufweist,
wobei das Leitungselement wenigstens ein Kennzeichnungselement aufweist, umfasst oder mit diesem verbunden ist, wobei das Kennzeichnungselement eine Identifikationsinformation aufweist oder beinhaltet,
wobei das Verfahren die folgenden Schritte aufweist:
-- in einem ersten Schritt wird die Identifikationsinformation erfasst oder detektiert,
-- in einem zweiten Schritt wird die mechanischen Verbindung des Leitungselements mit dem weiteren Leitungselement hergestellt.

Es ist somit erfindungsgemäß vorteilhaft möglich, dass nicht nur insbesondere eine Zuordnung und Speicherung (und damit die Möglichkeit des Führens eines Nachweises) der bei der Herstellung der Verbindung verwendeten Materialien bzw. Leitungselemente bzw. ihrer Art möglich ist, sondern darüber hinaus auch sichergestellt ist, dass ohne eine solche Erfassung bzw. Detektion der verwendeten Materialien bzw. Leitungselemente bzw. ihrer Art die Herstellung der Verbindung gar nicht möglich ist (oder nur unter Inkaufnahme einer Hinweismeldung oder eines Warnhinweises).

Insbesondere ist es bevorzugt vorgesehen, dass das weitere (bzw. vierte) Leitungselement wenigstens ein weiteres (bzw. vierte) Kennzeichnungselement - insbesondere in wenigstens einem weiteren (bzw. vierten) Verbindungsbereich - aufweist, umfasst oder mit diesem verbunden ist, wobei das weitere (bzw. vierte) Kennzeichnungselement eine weitere (bzw. vierte) Identifikationsinformation aufweist oder beinhaltet und wobei
-- das (erste) Leitungselement, insbesondere das (erste) Kennzeichnungselement, und
-- das weitere (bzw. vierte) Leitungselement, insbesondere das weitere (bzw. vierte) Kennzeichnungselement,
derart konfiguriert sind, dass in einem dritten Schritt - vor der vollständigen Durchführung des zweiten Schritts, insbesondere vor, während oder nach der Durchführung des ersten Schritts - das Erfassen oder die Detektion der weiteren (bzw. vierten) Identifikationsinformation erfolgt und die die Herstellung der mechanischen Verbindung des (ersten) Leitungselements mit dem weiteren (bzw. vierten) Leitungselement sowohl das Erfassen oder die Detektion der (ersten) Identifikationsinformation als auch der weiteren (bzw. vierten) Identifikationsinformation erfordert oder voraussetzt.

Weitere Vorteilhafte Ausgestaltungsmerkmale der Erfindung sind in den Unteransprüchen sowie der folgenden Beschreibung enthalten.

### Kurze Beschreibung der Zeichnungen

Anhand des in der Zeichnung dargestellten, bevorzugten Ausführungsbeispiels soll die Erfindung nun genauer erläutert werden. Dabei zeigt
- Fig. 1: eine schematische Perspektivansicht eines erfindungsgemäßen Leitungselements und eines weiteren Leitungselements, bevor diese mechanisch verbunden wurden,
- Fig. 2: eine schematische Perspektivansicht des erfindungsgemäßen Leitungselements und eines dritten Leitungselements, bevor diese mechanisch verbunden wurden,
- Fig. 3: eine schematische Perspektivansicht eines erfindungsgemäßen Presswerkzeugs bzw. eines erfindungsgemäßen Presswerkzeugs, verbunden mit einem Teil eines Pressgeräts.
- Fig. 4: eine schematische Perspektivansicht eines erfindungsgemäßen Presswerkzeugs bzw. eines erfindungsgemäßen Presswerkzeugs, verbunden mit einem Teil eines Pressgeräts.
- Fig. 5: eine schematische Perspektivansicht eines Teils eines erfindungsgemäßen Pressgeräts und eines erfindungsgemäßen Presswerkzeugs, wobei weiterhin auch eine abnehmbare Sensoreinheit dargestellt ist.
- Fig. 6: eine schematische Perspektivansicht eines erfindungsgemäßen Presswerkzeugs verbunden mit einem Teil eines Pressgeräts, wobei weiterhin auch die abnehmbare Sensoreinheit dargestellt ist.
- Fig. 7: eine schematische Perspektivansicht eines Teils eines erfindungsgemäßen Pressgeräts und eines erfindungsgemäßen Presswerkzeugs.

### Ausführungsformen der Erfindung

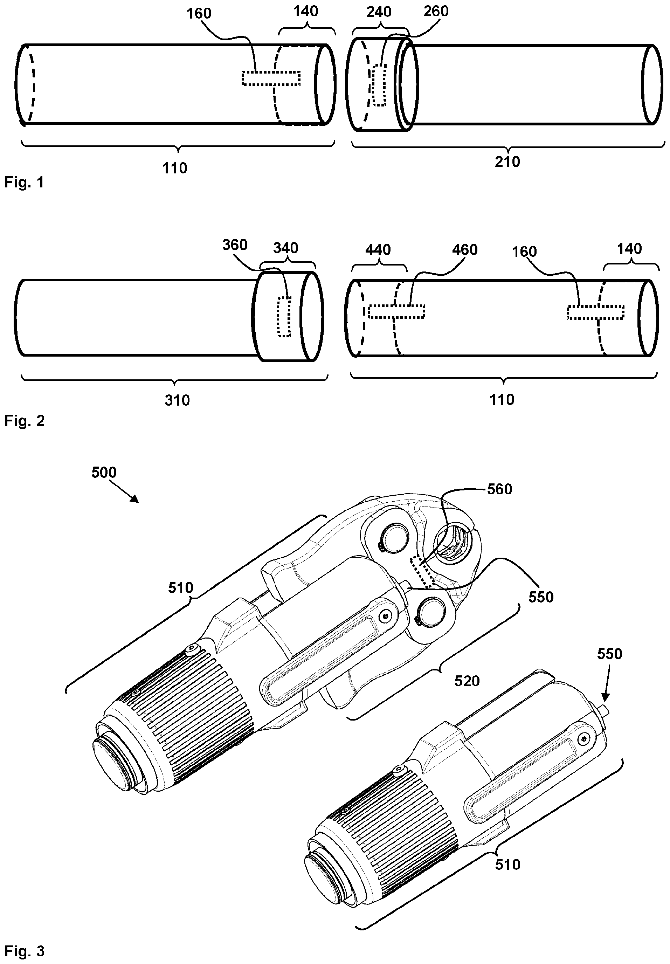

Die Figur 1 zeigt eine schematische Perspektivansicht eines erfindungsgemäßen Leitungselements 110 und eines weiteren Leitungselements 210, bevor diese mechanisch miteinander verbunden wurden. Das erfindungsgemäße Leitungselement 110 weist wenigstens einen Verbindungsbereich 140 auf. Auch das weitere Leitungselement 210 weist einen Verbindungsbereich 240 auf, welcher auch als weiterer Verbindungsbereich 240 bezeichnet wird. Der Verbindungsbereich 140 und der weitere Verbindungsbereich 240 dienen zur Herstellung einer mechanischen Verbindung, insbesondere in Form einer Verpressung, des Leitungselements 110 und des weiteren Leitungselements 210.

Das Leitungselement 110 weist erfindungsgemäß wenigstens ein Kennzeichnungselement 160 auf, umfasst dieses oder ist mit diesem verbunden. Das Kennzeichnungselement 160 weist eine Identifikationsinformation auf oder beinhaltet diese.

Erfindungsgemäß ist das Leitungselement 110 und das Kennzeichnungselement 160 derart konfiguriert, dass die Herstellung der mechanischen Verbindung des Leitungselements 110 mit dem weiteren Leitungselement 210 das Erfassen oder die Detektion der Identifikationsinformation erfordert oder voraussetzt. Hierzu wird mittels eines ersten Schritts die Identifikationsinformation mittels einer Erfassungseinrichtung (in Figur 1 nicht dargestellt) erfasst oder detektiert und in einem zweiten Schritt die mechanische Verbindung des Leitungselements 110 mit dem weiteren Leitungselement 210 hergestellt.

Erfindungsgemäß ist ferner auch bevorzugt vorgesehen, dass nicht ausschließlich die Identifikationsinformation des Kennzeichnungselements 160 (des Leitungselements 110) erfasst oder detektiert wird, bevor die mechanische Verbindung hergestellt wird, sondern dass darüber hinaus auch ein weiteres Kennzeichnungselement 260 des weiteren Leitungselements 210 (bzw. dessen weitere Identifikationsinformation) erfasst bzw. detektiert wird, bevor die mechanische Verbindung hergestellt wird, d.h. die Herstellung der mechanischen Verbindung zwischen dem Leitungselement 110 und dem weiteren Leitungselement 210 setzt das Erfassen oder die Detektion auch der weiteren Identifikationsinformation voraus. Entsprechend weist das weitere Leitungselement 210 wenigstens das weitere Kennzeichnungselement 260 - insbesondere in wenigstens dem weiteren Verbindungsbereich 240 - auf bzw. umfasst dieses oder ist mit diesem verbunden.

Figur 2 zeigt eine schematische Perspektivansicht des erfindungsgemäßen Leitungselements 110 und eines dritten Leitungselements 310, bevor diese mechanisch verbunden wurden.

Sowohl in Figur 1 als auch in Figur 2 sind als Beispiele für die dargestellten Leitungselemente 110, 210, 310 - d.h. das Leitungselement 110, das weitere Leitungselement 210 und das dritte Leitungselement 310 - Rohrelemente schematisch dargestellt, d.h. ein Rohrelement 110, ein weiteres Rohrelement 210 und ein drittes Rohrelement 310. Erfindungsgemäß ist es jedoch vorgesehen, dass solche Leitungselemente 110, 210, 310 alternativ auch als Kabelelemente ausgebildet sein können, was jedoch der Einfachheit halber nicht explizit in den Figuren 1 und 2 dargestellt ist. Auch solche Kabelelemente können durch mechanische Verbindung, insbesondere Verpressung, welche an Verbindungsbereichen der Kabelelemente vorgenommen werden, miteinander mechanisch dauerhaft und stabil verbunden werden, insbesondere für Hochvolt-Anwendungen aller Art, beispielsweise in Elektrofahrzeugen.

Das weitere Leitungselement 210 ist gemäß Figur 1 vorgesehen, am rechten Ende (oder im rechten Verbindungsbereich 140) des Leitungselements 110 mit diesem verbunden zu werden; die tatsächliche Verbindung ist jedoch in Figur 1 nicht dargestellt. Gemäß Figur 2 weist nun das Leitungselement 110 - zusätzlich zum Verbindungsbereich 140 - einen zusätzlichen Verbindungsbereich 440 auf. Der zusätzliche Verbindungsbereich 440 des Leitungselements 110 dient zur Herstellung einer mechanischen Verbindung, insbesondere in Form einer Verpressung, des Leitungselements 110 mit dem dritten Leitungselement 310. Somit ist gemäß Figur 2 das dritte Leitungselement 310 vorgesehen am linken Ende (oder im linken Verbindungsbereich 440 des Leitungselements 110) mit diesem verbunden zu werden. Hierzu weist das dritte Leitungselement 310 wenigstens ein drittes Kennzeichnungselement 360 auf, umfasst dieses oder ist mit diesem verbunden, wobei das dritte Kennzeichnungselement 360 eine dritte Identifikationsinformation aufweist oder beinhaltet und wobei das Leitungselement 110 und das dritte Kennzeichnungselement 360 derart konfiguriert sind, dass die Herstellung der mechanischen Verbindung des Leitungselements 110 mit dem dritten Leitungselement 310 das Erfassen oder die Detektion der dritten Identifikationsinformation erfordert oder voraussetzt. Insbesondere ist es jedoch vorgesehen, dass das Leitungselement 110 - zusätzlich zum Kennzeichnungselement 160 - ein zusätzliches Kennzeichnungselement 460 aufweist, umfasst oder mit diesem verbunden ist, wobei das zusätzliche Kennzeichnungselement 460 eine zusätzliche Identifikationsinformation aufweist oder beinhaltet und wobei das Leitungselement 110 und das dritte Kennzeichnungselement 360 derart konfiguriert sind, dass die Herstellung der mechanischen Verbindung des Leitungselements 110 mit dem dritten Leitungselement 310 das Erfassen oder die Detektion auch der zusätzlichen Identifikationsinformation erfordert oder voraussetzt.

Im Kontext der vorliegenden Erfindung und mit Bezug zu den Figuren 1 und 2 neben den Begriffen Leitungselement 110, weiteres Leitungselement 210 und drittes Leitungselement 310 der Einfachheit halber auch von einem ersten Leitungselement 110, einem vierten Leitungselement 210 und einem dritten Leitungselement 310 gesprochen. Das (erste) Leitungselement 110 weist den (ersten) Verbindungsbereich 140 zur Verbindung mit dem weiteren (bzw. vierten) Leitungselement 210 (über dessen weiteren (bzw. vierten) Verbindungsbereich 240) auf. Ferner weist das (erste) Leitungselement 110 den zusätzlichen Verbindungsbereich 440 als zweiten Verbindungsbereich 440 zur Verbindung mit dem dritten Leitungselement 310 (über dessen dritten Verbindungsbereich 340) auf. Insbesondere ist es erfindungsgemäß vorgesehen, dass jedem der Verbindungsbereiche - also insbesondere dem ersten und zweiten Verbindungsbereich 140, 440 des (ersten) Leitungselements 110 -jeweils ein Kennzeichnungselement 160, 460 mit jeweils einer Identifikationsinformation zugeordnet ist, d.h. die hergestellte Verbindung zwischen dem (ersten) Leitungselement 110 und dem weiteren (vierten) Leitungselement 210 wird durch sowohl die (erste) Identifikationsinformation als auch die weitere (vierte) Identifikationsinformation repräsentiert bzw. überprüfbar validiert und die hergestellte Verbindung zwischen dem (ersten) Leitungselement 110 und dem dritten Leitungselement 310 wird durch sowohl die zusätzliche (zweite) Identifikationsinformation (des zweiten Kennzeichnungselements 460) als auch die dritte Identifikationsinformation (des dritten Kennzeichnungselements 360) repräsentiert bzw. überprüfbar validiert.

In Figur 3 ist schematisch eine Perspektivansicht einer Anordnung 500 aus einem Pressgerät 510 und einem Presswerkzeug 520, d.h. das erfindungsgemäße Presswerkzeug 520, verbunden mit dem Pressgerät 510, sowie auch (im rechten unteren Teil der Figur 3) das Pressgerät 510 ohne Presswerkzeug (bzw. ein Teil des Pressgeräts 510 ohne Presswerkzeug) dargestellt.

Gemäß der vorliegenden Erfindung ist es in vorteilhafter Weise möglich, dass die Erfassung bzw. Detektion jedenfalls der Identifikationsinformation (des Leitungselements 110) bei der Herstellung der mechanischen Verbindung bzw. im Zuge der Herstellung der mechanischen Verbindung des Leitungselements 110 mit dem weiteren (vierten) Leitungselement 210 und/oder mit dem dritten Leitungselement 310 erfolgt. Erfindungsgemäß ist bevorzugt ein Sensorelement bzw. ein Leseelement bzw. eine Erfassungseinrichtung 550 zur Erfassung der Identifikationsinformation des jeweiligen Kennzeichnungselements 160, 460, 260, 360 vorgesehen. Eine solche Erfassungsvorrichtung 550 (bzw. Erfassungseinrichtung 550) ist entweder vom Pressgerät 510 oder Presswerkzeug 520 separat vorgesehen oder aber sie ist in des Pressgerät 510 bzw. auch in das Presswerkzeug 520 integriert bzw. damit verbunden vorgesehen. Gemäß der rein schematischen Darstellung gemäß Figur 3 ist die Erfassungsvorrichtung 550 (bzw. die Erfassungseinrichtung 550) als mit dem Presswerkgerät 510 bzw. mit dem Pressgerät 510 verbunden dargestellt. Über beispielsweise eine Öffnung oder eine Ausnehmung oder eine Bohrung als Teil des Presswerkzeugs 520 ist es beispielsweise möglich, die jeweilige Identifikationsinformation der jeweiligen Kennzeichnungselemente 160, 460, 260, 360 zu erfassen oder detektieren, bevor die mechanische Verbindung der betreffenden Leitungselemente 110, 210, 310 tatsächlich hergestellt wird. Insbesondere kann es erfindungsgemäß vorteilhaft vorgesehen sein, dass die Erfassungsvorrichtung 550 (bzw. die Erfassungseinrichtung 550) derart konfiguriert ist, dass die Identifikationsinformation erfasst bzw. gelesen werden kann unabhängig von der relativen Drehstellung des Leitungselements relativ zum Presswerkzeug, d.h. die Identifikationsinformation kann gelesen oder erfasst werden unabhängig davon an welcher Stelle (beispielsweise entlang des äußeren Umfangs des Leitungselements) das Kennzeichnungselement 160, 460, 260, 360 (und damit die Identifikationsinformation) angeordnet ist. Besonders bevorzugt ist es erfindungsgemäß weiterhin, dass die Anordnung aus Pressgerät 510 und Presswerkzeug 520 bevorzugt ebenfalls ein Kennzeichnungselement 560 aufweist, wobei dieses Kennzeichnungselement 560 (im Kontext der vorliegenden Erfindung auch als viertes Kennzeichnungselement 560 bezeichnet) insbesondere am Presswerkzeug 520 angebracht bzw. mit diesem verbunden vorgesehen ist. Hierdurch ist es erfindungsgemäß vorteilhaft möglich, dass mittels der Erfassungsvorrichtung 550 (bzw. der Erfassungseinrichtung 550) nicht nur die jeweilige Identifikationsinformation der jeweiligen Kennzeichnungselemente 160, 460, 260, 360 erfasst bzw. detektiert werden kann, sondern auch die Identifikationsinformation des vierten Kennzeichnungselements 560, insbesondere bevor die mechanische Verbindung der betreffenden Leitungselemente 110, 210, 310 tatsächlich hergestellt wird.

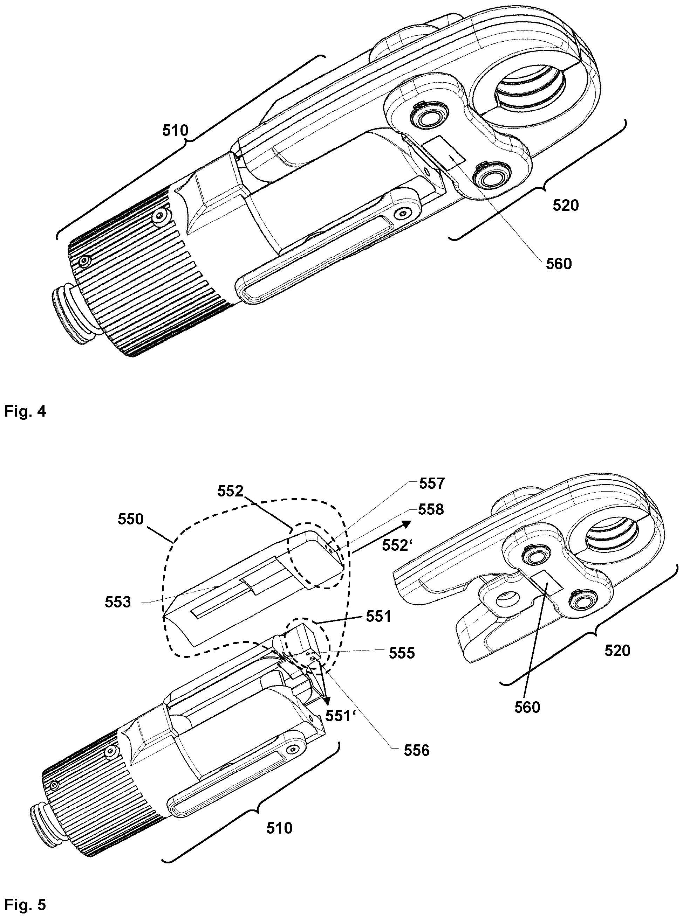

In Figur 4 ist schematisch eine Perspektivansicht einer Anordnung 500 aus einem Pressgerät 510 (bzw. eines Teils davon) und einem Presswerkzeug 520, d.h. das erfindungsgemäße Presswerkzeug 520, verbunden mit dem Pressgerät 510, gemäß einer beispielhaften Ausführungsform der Erfindung dargestellt. Aus Figur 4 ist erkennbar, dass die Anordnung aus Pressgerät 510 und Presswerkzeug 520 bevorzugt ebenfalls ein Kennzeichnungselement 560 aufweist, wobei dieses Kennzeichnungselement 560 (im Kontext der vorliegenden Erfindung auch als viertes Kennzeichnungselement 560 bezeichnet) insbesondere am Presswerkzeug 520 angebracht bzw. mit diesem verbunden vorgesehen ist. Hierdurch ist es erfindungsgemäß vorteilhaft möglich, dass mittels der Erfassungsvorrichtung 550 (bzw. der Erfassungseinrichtung 550) nicht nur die jeweilige Identifikationsinformation der jeweiligen Kennzeichnungselemente 160, 460, 260, 360 erfasst bzw. detektiert werden kann, sondern auch die Identifikationsinformation des vierten Kennzeichnungselements 560, insbesondere bevor die mechanische Verbindung der betreffenden Leitungselemente 110, 210, 310 tatsächlich hergestellt wird. Eine solche Ausführungsform ist auch in den Figuren 5, 6 und 7 mit weiteren Details dargestellt: So zeigt
-- Figur 5 (im unteren linken Bereich der Figur 5) eine schematische Perspektivansicht des Teils des erfindungsgemäßen Pressgeräts 510 und (im oberen rechten Bereich der Figur 5) das erfindungsgemäße Presswerkzeug 520,

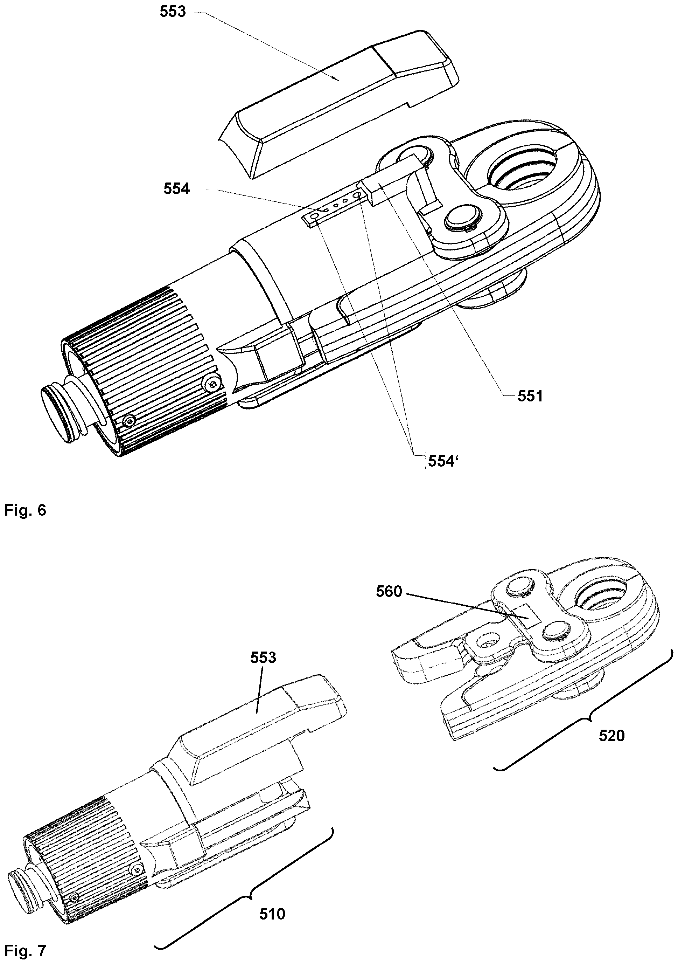

-- Figur 6 eine schematische Perspektivansicht einer Anordnung 500 aus dem Pressgerät 510 (bzw. eines Teils davon) und dem Presswerkzeug 520, d.h. das erfindungsgemäße Presswerkzeug 520, verbunden mit dem Pressgerät 510 und
-- Figur 7 eine - gegenüber Figur 3 um eine Längsachse der Anordnung geschwenkte - schematische Perspektivansicht des Teils des erfindungsgemäßen Pressgeräts 510 (unterer linker Bereich der Figur 7) und das erfindungsgemäße Presswerkzeug 520 (oberer rechter Bereich der Figur 7).
Das Presswerkzeug 520 weist in allen diesen Darstellungen der Figuren 4 bis 7 (insbesondere beidseitig) das Kennzeichnungselement 560 (bzw. das vierte Kennzeichnungselement 560) auf. Ferner ist die Erfassungsvorrichtung 550 in einer bevorzugten Ausführungsform dargestellt, bei der die Erfassungseinrichtung 550 derart ausgebildet ist, dass die Anordnung umfassend das Pressgerät 510 und das Presswerkzeug 520 wenigstens zwei Erfassungselemente oder Sensoren (d.h. ein erstes Erfassungselement (oder auch erster Sensor) 551 und ein zweites Erfassungselement (oder auch zweiter Sensor) 552) aufweist. Das erste Erfassungselement 551 (bzw. der erste Sensor 551) dient hierbei beispielhaft insbesondere zur Erfassung oder Detektion der Identifikationsinformation des Presswerkzeugs 520 - d.h. zur Erfassung oder Detektion der Identifikationsinformation des vierten Kennzeichnungselements 560 des Presswerkzeugs 520. Das zweite Erfassungselement 552 (bzw. der zweite Sensor 552) dient beispielhaft insbesondere zur Erfassung oder Detektion der Identifikationsinformation des Leitungselements 110 und/oder eines anderen der Leitungselemente 210, 310 - d.h. zur Erfassung oder Detektion der Identifikationsinformation des ersten Kennzeichnungselements 160 des Leitungselements 110 und/oder des weiteren Kennzeichnungselements 260 des weiteren Leitungselements 210 und/oder des dritten Kennzeichnungselements 360 des dritten Leitungselements 310 und/oder des zusätzlichen Kennzeichnungselements 460 des Leitungselements 110. Beispielhaft ist in insbesondere den Figuren 5 und 6 dargestellt, dass das erste Erfassungselement 551 (bzw. erster Sensor 551) am Pressgerät 510 angebunden ist bzw. Teil des Gehäuses des Pressgeräts 510 ist bzw. in dieses integriert vorgesehen ist. Das zweite Erfassungselement 552 (bzw. der zweite Sensor 552) ist beispielhaft als oder in Form einer abnehmbaren Sensoreinheit 553, insbesondere einer vom Pressgerät 510 bzw. vom Gehäuse des Pressgeräts 510 abnehmbaren Sensoreinheit 553, ausgebildet. Die Figuren 5 und 6 zeigen die abnehmbare Sensoreinheit 553 beispielhaft in vom Pressgerät 510 abgetrennter Position, während die Figur 7 die abnehmbare Sensoreinheit 553 in montierter Position darstellt. Zur Kontaktierung bzw. zur Signalübertragung von elektrischen Signalen oder aber von Sensorsignalen (bzw. auch zur Versorgung aktiver Bauelemente, insbesondere des zweiten Erfassungselements 552, innerhalb bzw. als Teil der abnehmbaren Sensoreinheit 553 mit elektrischer Energie) zwischen dem Pressgerät 510 und der abnehmbaren Sensoreinheit 553 sind insbesondere eine Mehrzahl von Kontakten 554 am Pressgerät 510 bzw. dessen Gehäuse und (nicht dargestellt) an der abnehmbaren Sensoreinheit 553 vorgesehen, vgl. insbesondere Figur 6. Zur Montage bzw. zur Befestigung bzw. zur Arretierung der abnehmbaren Sensoreinheit 553 am Pressgerät 510 bzw. dessen Gehäuse ist insbesondere eine Magnetbefestigung 554', insbesondere umfassend einen Magneten oder eine Mehrzahl von Magneten, vorgesehen, vgl. ebenfalls insbesondere Figur 6.

Wie erwähnt ist es erfindungsgemäß insbesondere vorgesehen, dass die Erfassungseinrichtung 550 das erste Erfassungselement 551 (bzw. der erste Sensor 551) und das zweite Erfassungselement 552 (bzw. der zweite Sensor 552) aufweist. Gemäß der beispielhaften Darstellung der Figuren 5 und 6 ist das zweite Erfassungselement 552 als Teil der abnehmbaren Sensoreinheit 553 ausgebildet. Dies ist jedoch nicht zwingend derart realisiert; auch das zweite Erfassungselement 552 kann gemäß einer nicht dargestellten Ausführungform am Pressgerät 510 angebunden sein bzw. Teil des Gehäuses des Pressgeräts 510 sein bzw. in dieses integriert vorgesehen sein.
Insbesondere ist es ferner vorgesehen, dass das erste Erfassungselement 551 bzw. der erste Sensor 551 und das zweite Erfassungselement 552 bzw. der zweite Sensor 552 unterschiedliche Sensierrichtungen aufweisen bzw. ihre Detektion bzw. Erfassung in unterschiedliche Richtungen erfolgt. So ist die Sensierrichtung des ersten Erfassungselements 551 (etwa besonders gut in Figur 5 sichtbar und mit einem Pfeil darstellt, erste Sensierrichtung 551') im Wesentlichen senkrecht zur Längsachse der Anordnung aus dem Pressgerät 510 (bzw. eines Teils davon) und dem Presswerkzeug 520 vorgesehen, während die Sensierrichtung des zweiten Erfassungselements 552 (ebenfalls besonders gut in Figur 5 sichtbar und mit einem Pfeil darstellt, zweite Sensierrichtung 552') im Wesentlichen parallel zur Längsachse der Anordnung aus dem Pressgerät 510 und dem Presswerkzeug 520 vorgesehen ist. Die Längsachse dieser Anordnung verläuft hierbei gemäß der Darstellung in allen Figuren 4 bis 7 etwa von links unten nach rechts oben. Erfindungsgemäß ist es insbesondere vorgesehen, dass im ersten Schritt
-- zunächst die Erfassung oder Detektion der Identifikationsinformation des Presswerkzeugs 520 und anschließend die Erfassung oder Detektion der Identifikationsinformation des Leitungselements 110 (bzw. von weiteren Leitungselementen) erfolgt, oder
-- zunächst die Erfassung oder Detektion der Identifikationsinformation des Leitungselements 110 (bzw. von weiteren Leitungselementen) und anschließend die Erfassung oder Detektion der Identifikationsinformation des Presswerkzeugs 520 erfolgt, oder
-- gleichzeitig oder zumindest teilweise gleichzeitig die Erfassung oder Detektion der Identifikationsinformation des Leitungselements 110 (bzw. von weiteren Leitungselementen) und die Erfassung oder Detektion der Identifikationsinformation des Presswerkzeugs 520 erfolgt.

Erfindungsgemäß ist es besonders bevorzugt, dass die Kennzeichnungselemente 160, 460, 260, 360 der Leitungselemente 110, 210, 310 und auch das vierte Kennzeichnungselement 560 des Presswerkzeugs 520 jeweils gleichartig aufgebaut bzw. vorgesehen sind, insbesondere in Form eines optisch erkennbaren Aufdrucks oder Labels oder einer optisch erkennbaren Oberfläche ausgebildet sind. Die Erfassung oder die Detektion der Identifikationsinformation (des jeweiligen Kennzeichnungselements 160, 460, 260, 360, 560) oder der Identifikationsinformationen (der jeweiligen Kennzeichnungselemente 160, 460, 260, 360, 560) erfolgt bevorzugt jeweils durch eine optische Erfassung des Kennzeichnungselements oder der Kennzeichnungselemente, insbesondere durch optische Detektion einer Farbe (bzw. der einen Farbe des Aufdrucks oder Labels) oder einer Mehrzahl von Farben oder einer Mehrzahl angeordneter Farbflächen (etwa zwei Farbflächen nebeneinander angeordnet (beispielsweise als Linie oder linienförmig) oder auch zwei konzentrisch angeordnete kreisförmige (bzw. ringförmige) Farbflächen), wobei insbesondere zur Erfassung oder Detektion der Identifikationsinformation oder der Identifikationsinformationen eine Bestrahlung oder Beleuchtung des Bereichs des jeweiligen Kennzeichnungselements 160, 460, 260, 360, 560 mit einer entsprechenden elektromagnetischen Strahlung (im sichtbaren Spektralbereich) vorgesehen ist. Hierzu weist insbesondere das erste Erfassungselement 551 bzw. der erste Sensor 551 eine (in Richtung der ersten Sensierrichtung 551' strahlende bzw. beleuchtende) erste Hilfsbeleuchtung 555 und einen (insbesondere bezogen auf die erste Sensierrichtung 551' empfindlichen) ersten Farbsensor 556 auf und es weist das zweite Erfassungselement 552 bzw. der zweite Sensor 552 eine (in Richtung der zweiten Sensierrichtung 552' strahlende bzw. beleuchtende) zweite Hilfsbeleuchtung 557 und einen (insbesondere bezogen auf die zweite Sensierrichtung 552' empfindlichen) zweiten Farbsensor 558 auf.

Zur Durchführung des ersten Schritts des erfindungsgemäßen Verfahrens muss die jeweils relevante Identifikationsinformation des jeweils relevanten Kennzeichnungselements 160, 460, 260, 360, 560 gelesen bzw. detektiert oder erfasst werden. Hierzu weist entweder die Anordnung 500 aus Pressgerät 510 und Presswerkzeug 520 die Erfassungseinrichtung 550 auf oder ist mit dieser verbunden oder zumindest in räumlicher Nähe vorgesehen. Erfindungsgemäß ist gemäß einer ersten Variante die Erfassungseinrichtung 550 Teil des Pressgeräts 510 und nicht Teil des Presswerkzeugs (diese Variante ist in Figur 3 dargestellt). Gemäß einer zweiten Variante ist die Erfassungseinrichtung 550 umgekehrt nicht Teil des Pressgeräts 510 sondern Teil des Presswerkzeugs 520 (diese Variante ist in Figur 3 nicht dargestellt und auch nicht in einer weiteren Figur). Gemäß einer dritten Variante ist die Erfassungseinrichtung 550 weder Teil des Pressgeräts 510 noch Teil des Presswerkzeugs 520, sondern als separate, jedoch beispielsweise verbindbare - etwa am oder auf das Pressgerät 510 und/oder am oder auf das Presswerkzeug 520 aufsteckbare oder ansteckbare - Erfassungseinrichtung 550 vorgesehen. Diese dritte Variante, gemäß der die Erfassungseinrichtung 550 realisiert sein kann, umfasst solche Varianten bzw. Ausführungsformen der Erfassungseinrichtung 550, bei der die Erfassungseinrichtung 550 als Zusatzkomponente (etwa als Zubehörteil zur dezidierten Verwendung als Erfassungseinrichtung oder auch als Erfassungseinrichtung zusammen mit dem Pressgerät 510 und/oder dem Presswerkzeug 520) zusammen mit oder an entweder dem Pressgerät 510 und/oder dem Presswerkzeug 520 verwendet wird. Alternativ hierzu ist es gemäß solcher Varianten bzw. Ausführungsformen der Erfassungseinrichtung 550 jedoch auch möglich und bevorzugt, dass als Erfassungseinrichtung 550 ein vom Pressgerät 510 und vom Presswerkzeug 520 unabhängiges Gerät, etwa in Form eines Smartphones, eines tragbaren Computers, eines Laptops oder sonstiger Gerät, verwendet wird, welches mit solchen Sensoren ausgerüstet ist, die die Erfassung oder die Detektion der jeweiligen Identifikationsinformation durch ein solches unabhängiges Gerät ermöglichen.

Gemäß sämtlicher Varianten der Erfassungseinrichtung 550 bzw. auch des erfindungsgemäßen Verfahrens ist es erfindungsgemäß vorgesehen, dass nach der Erfassung bzw. Detektion der jeweiligen Identifikationsinformation (oder auch der Mehrzahl an Identifikationsinformationen) und vor der Herstellung der mechanischen Verbindung bzw. auch vor der Einleitung (insbesondere des Kraftaufbaus) der Herstellung der mechanischen Verbindung geprüft wird, ob die jeweils zu erfassende oder zu detektierende Identifikationsinformation oder -informationen richtig und vollständig erfasst ist bzw. sind bzw. wurde(n). Falls das Ergebnis dieser Prüfung auf eine richtige und vollständige Erfassung oder Detektion hindeutet, wird ein Freigabesignal oder eine Freigabeinformation erzeugt bzw. übertragen, welches oder welche die Voraussetzung ist für die eigentliche Herstellung der mechanischen Verbindung bzw. auch für die Einleitung (insbesondere des Kraftaufbaus) für die Herstellung der mechanischen Verbindung. Die Durchführung der Prüfung und die Generierung bzw. Übertragung des Freigabesignals bzw. der Freigabeinformation erfolgt erfindungsgemäß entweder in oder durch die Erfassungseinrichtung 550 oder aber im oder durch das Pressgerät 510. Wenn die Durchführung der Prüfung und die Generierung bzw. Übertragung des Freigabesignals bzw. der Freigabeinformation durch die Erfassungseinrichtung 550 erfolgt, wird das Freigabesignal bzw. die Freigabeinformation von der Erfassungseinrichtung 550 zum Pressgerät 510 übertragen bzw. ist es erforderlich, dass diese Übertragung stattfindet, bevor die Herstellung der mechanischen Verbindung erfolgt.

### Ausführungsformen der Erfindung:

1. Ausführungsform: Leitungselement (110) mit wenigstens einem Verbindungsbereich (140), wobei der Verbindungsbereich (140) zur Herstellung einer mechanischen Verbindung, insbesondere in Form einer Verpressung, des Leitungselements (110) mit einem weiteren Leitungselement (210) vorgesehen ist,
   wobei das Leitungselement (110) wenigstens ein Kennzeichnungselement (160) aufweist, umfasst oder mit diesem verbunden ist,
   wobei das Kennzeichnungselement (160) eine Identifikationsinformation aufweist oder beinhaltet und wobei das Leitungselement (110) und das Kennzeichnungselement (160) derart konfiguriert sind, dass die Herstellung der mechanischen Verbindung des Leitungselements (110) mit dem weiteren Leitungselement (210) das Erfassen oder die Detektion der Identifikationsinformation erfordert oder voraussetzt.
2. Ausführungsform: Leitungselement (110) nach Ausführungsform 1, dadurch gekennzeichnet, dass das weitere Leitungselement (210) wenigstens ein weiteres Kennzeichnungselement (260) - insbesondere in wenigstens einem weiteren Verbindungsbereich (240) - aufweist, umfasst oder mit diesem verbunden ist,
   wobei das weitere Kennzeichnungselement (260) eine weitere Identifikationsinformation aufweist oder beinhaltet und wobei das Leitungselement (110) und das weitere Kennzeichnungselement (260) derart konfiguriert sind, dass die Herstellung der mechanischen Verbindung des Leitungselements (110) mit dem weiteren Leitungselement (210) das Erfassen oder die Detektion auch der weiteren Identifikationsinformation erfordert oder voraussetzt.
3. Ausführungsform: Leitungselement (110) nach einem der vorhergehenden Ausführungsformen, dadurch gekennzeichnet, dass das Leitungselement (110) ein Rohrelement ist, vorgesehen zur Verbindung mit einem weiteren Rohrelement als weiteres Leitungselement (210), oder dass das Leitungselement (110) ein Kabelelement ist, vorgesehen zur Verbindung mit einem weiteren Kabelelement als weiteres Leitungselement (210).
4. Ausführungsform: Leitungselement (110) nach einem der vorhergehenden Ausführungsformen, dadurch gekennzeichnet, dass das Leitungselement (110) - zusätzlich zu dem Verbindungsbereich (140) - einen zusätzlichen Verbindungsbereich (440) aufweist,
   wobei der zusätzliche Verbindungsbereich (440) des Leitungselements (110) zur Herstellung einer mechanischen Verbindung, insbesondere in Form einer Verpressung, des Leitungselements (110) mit einem dritten Leitungselement (310) vorgesehen ist,
   wobei insbesondere das dritte Leitungselement (310) wenigstens ein drittes Kennzeichnungselement (360) aufweist, umfasst oder mit diesem verbunden ist,
   wobei das dritte Kennzeichnungselement (360) eine dritte Identifikationsinformation aufweist oder beinhaltet und wobei das Leitungselement (110) und das dritte Kennzeichnungselement (360) derart konfiguriert sind, dass die Herstellung der mechanischen Verbindung des Leitungselements (110) mit dem dritten Leitungselement (310) das Erfassen oder die Detektion auch der dritten Identifikationsinformation erfordert oder voraussetzt,
   wobei insbesondere das Leitungselement (110) - zusätzlich zu dem Kennzeichnungselement (160) - ein zusätzliches Kennzeichnungselement (460) aufweist, umfasst oder mit diesem verbunden ist, wobei das zusätzliche Kennzeichnungselement (460) eine zusätzliche Identifikationsinformation aufweist oder beinhaltet und wobei das Leitungselement (110) und das dritte Kennzeichnungselement (360) derart konfiguriert sind, dass die Herstellung der mechanischen Verbindung des Leitungselements (110) mit dem dritten Leitungselement (310) das Erfassen oder die Detektion auch der zusätzlichen Identifikationsinformation erfordert oder voraussetzt.
5. Ausführungsform: Leitungselement (110) nach einem der vorhergehenden Ausführungsformen, dadurch gekennzeichnet, dass das Kennzeichnungselement (160) und/oder das weitere Kennzeichnungselement (260) und/oder das dritte Kennzeichnungselement (360) und/oder das zusätzliche Kennzeichnungselement (460) in Form wenigstens eines der nachfolgenden Kennzeichnungselemente realisiert ist:
   -- in Form eines optisch erkennbaren Aufdrucks oder Labels - insbesondere als Barcode oder QR-Code -, positioniert in einem Bereich der äußeren oder inneren Oberfläche des Leitungselements (110) oder des weiteren Leitungselements (210) oder des dritten Leitungselements (310), insbesondere im oder in räumlicher Nähe des Verbindungsbereichs (140) oder des weiteren Verbindungsbereichs (240) oder des dritten Verbindungsbereichs (340) oder des zusätzlichen Verbindungsbereichs (440),
   -- in Form eines elektromagnetisch auslesbaren Transponderelements oder RFID-Tag-Elements, positioniert in einem Bereich der äußeren oder inneren Oberfläche des Leitungselements (110) oder des weiteren Leitungselements (210), insbesondere im oder in räumlicher Nähe des Verbindungsbereichs (140) oder des weiteren Verbindungsbereichs (240) oder des dritten Verbindungsbereichs (340) oder des zusätzlichen Verbindungsbereichs (440).
6. Ausführungsform: Leitungselement (110) nach einem der vorhergehenden Ausführungsformen, dadurch gekennzeichnet, dass die Identifikationsinformation das Leitungselement (110) oder den Verbindungsbereich (140) des Leitungselements (110) identifiziert, insbesondere eindeutig und individualisiert identifiziert, und/oder dass die weitere Identifikationsinformation das weitere Leitungselement (210) identifiziert, insbesondere eindeutig und individualisiert identifiziert, und/oder dass die dritte Identifikationsinformation das dritte Leitungselement (310) identifiziert, insbesondere eindeutig und individualisiert identifiziert, und/oder die zusätzliche Identifikationsinformation das Leitungselement (110) oder den zusätzlichen Verbindungsbereich (440) des Leitungselements (110) identifiziert, insbesondere eindeutig und individualisiert identifiziert, wobei diese Identifizierung oder individuelle Identifizierung insbesondere eine Materialinformation umfasst.
7. Ausführungsform: Leitungselement (110) nach einem der vorhergehenden Ausführungsformen, dadurch gekennzeichnet, dass die Herstellung der mechanischen Verbindung des Leitungselements (110) mit dem weiteren Leitungselement (210) das Kennzeichnungselement (160) und/oder das weitere Kennzeichnungselement (260) zumindest teilweise zerstört und/oder dass die Herstellung der mechanischen Verbindung des Leitungselements (110) mit dem dritten Leitungselement (310) das dritte Kennzeichnungselement (360) und/oder das zusätzliche Kennzeichnungselement (460) zumindest teilweise zerstört.
8. Ausführungsform: Leitungselement (110) nach einem der vorhergehenden Ausführungsformen, dadurch gekennzeichnet, dass das Leitungselement (110) ein Fitting oder ein Rohr oder ein Kabel ist.
9. Ausführungsform: Pressgerät, insbesondere elektrohydraulisches Pressgerät, zur Herstellung einer Verbindung zwischen einem Leitungselement (110) und einem weiteren Leitungselement (210) oder zwischen dem Leitungselement (110) und einem dritten Leitungselement (310), wobei das Pressgerät einen Antrieb zum Bewegen eines Presswerkzeugs umfasst und wobei die Anordnung aus Pressgerät und Presswerkzeug eine Erfassungseinrichtung zur Erfassung der Identifikationsinformation des Kennzeichnungselements (160) aufweist, umfasst oder mit dieser verbunden ist,
   wobei insbesondere das Pressgerät die Erfassungseinrichtung umfasst,
   wobei die Anordnung aus Pressgerät und Presswerkzeug und die Erfassungseinrichtung derart konfiguriert sind, dass die Herstellung der mechanischen Verbindung des Leitungselements (110) mit dem weiteren Leitungselement (210) das Erfassen oder die Detektion der Identifikationsinformation erfordert oder voraussetzt und/oder wobei die Anordnung aus Pressgerät und Presswerkzeug die Erfassungseinrichtung oder eine weitere Erfassungseinrichtung zur Erfassung der weiteren Identifikationsinformation des weiteren Kennzeichnungselements (260) aufweist, umfasst oder mit dieser verbunden ist, wobei die Anordnung aus Pressgerät und Presswerkzeug und die Erfassungseinrichtung oder die weitere Erfassungseinrichtung derart konfiguriert sind, dass die Herstellung der mechanischen Verbindung des Leitungselements (110) mit dem weiteren Leitungselement (210) das Erfassen oder die Detektion der weiteren Identifikationsinformation erfordert oder voraussetzt.
10. Ausführungsform: Presswerkzeug mit einer Erfassungseinrichtung für ein Pressgerät nach Ausführungsform 9.
11. Ausführungsform: Erfassungseinrichtung für ein Pressgerät nach Ausführungsform 9 oder für ein Presswerkzeug nach Ausführungsform 10.
12. Ausführungsform: Verfahren zur Herstellung einer mechanischen Verbindung, insbesondere in Form einer Verpressung, zwischen einem Leitungselement (110) und einem weiteren Leitungselement (210), wobei das Leitungselement (110) wenigstens einen Verbindungsbereich (140) zur Herstellung der mechanischen Verbindung aufweist,
   wobei das Leitungselement (110) wenigstens ein Kennzeichnungselement (160) aufweist, umfasst oder mit diesem verbunden ist, wobei das Kennzeichnungselement (160) eine Identifikationsinformation aufweist oder beinhaltet,
   wobei das Verfahren die folgenden Schritte aufweist:
   -- in einem ersten Schritt wird die Identifikationsinformation erfasst oder detektiert,
   -- in einem zweiten Schritt wird die mechanischen Verbindung des Leitungselements (110) mit dem weiteren Leitungselement (210) hergestellt.
13. Ausführungsform: Verfahren nach Ausführungsform 12, dadurch gekennzeichnet, dass das weitere Leitungselement (210) wenigstens ein weiteres Kennzeichnungselement (260) - insbesondere in wenigstens einem weiteren Verbindungsbereich (240) - aufweist, umfasst oder mit diesem verbunden ist, wobei das weitere Kennzeichnungselement (260) eine weitere Identifikationsinformation aufweist oder beinhaltet und wobei
   -- das Leitungselement (110), insbesondere das Kennzeichnungselement (160), und
   -- das weitere Leitungselement (210), insbesondere das weitere Kennzeichnungselement (260),
   derart konfiguriert sind, dass in einem dritten Schritt - vor der vollständigen Durchführung des zweiten Schritts, insbesondere vor, während oder nach der Durchführung des ersten Schritts - das Erfassen oder die Detektion der weiteren Identifikationsinformation erfolgt und die die Herstellung der mechanischen Verbindung des Leitungselements (110) mit dem weiteren Leitungselement (210) sowohl das Erfassen oder die Detektion der Identifikationsinformation als auch der weiteren Identifikationsinformation erfordert oder voraussetzt.

## Patentansprüche

1. Verfahren zur Herstellung einer mechanischen Verbindung, insbesondere in Form einer Verpressung, zwischen einem Leitungselement (110) und einem weiteren Leitungselement (210) mittels einer Anordnung umfassend ein Pressgerät (510) und ein Presswerkzeug (520), wobei die Anordnung eine Erfassungseinrichtung (550) aufweist, wobei das Leitungselement (110) wenigstens einen Verbindungsbereich (140) zur Herstellung der mechanischen Verbindung aufweist,
wobei das Leitungselement (110) wenigstens ein Kennzeichnungselement (160) aufweist, umfasst oder mit diesem verbunden ist und wobei das Presswerkzeug (520) wenigstens ein Kennzeichnungselement (560) aufweist, umfasst oder mit diesem verbunden ist, wobei die Kennzeichnungselemente (160, 560) jeweils eine Identifikationsinformation aufweisen oder beinhalten, wobei das Verfahren die folgenden Schritte aufweist:
-- in einem ersten Schritt wird wenigstens eine der Identifikationsinformationen erfasst oder detektiert,
-- in einem zweiten Schritt wird die mechanischen Verbindung des Leitungselements (110) mit dem weiteren Leitungselement (210) hergestellt, insbesondere nur dann hergestellt, wenn wenigstens eine der Identifikationsinformationen erfasst oder erkannt wurde.

2. Verfahren nach Anspruch 1, **dadurch gekennzeichnet, dass** nach der Erfassung oder Detektion der Identifikationsinformation oder Identifikationsinformationen und
-- vor der Herstellung der mechanischen Verbindung oder
-- vor der Einleitung des Kraftaufbaus zur Herstellung der mechanischen Verbindung
geprüft wird, ob die jeweils zu erfassende oder zu detektierende Identifikationsinformation oder Identifikationsinformationen richtig und vollständig erfasst wurde oder wurden.

3. Verfahren nach einem der vorhergehenden Ansprüche, **dadurch gekennzeichnet, dass** die Anordnung umfassend das Pressgerät (510) und das Presswerkzeug (520) die Erfassungseinrichtung (550) derart aufweist, dass die Anordnung umfassend das Pressgerät (510) und das Presswerkzeug (520) wenigstens zwei Erfassungselemente oder Sensoren aufweist, wobei ein erstes Erfassungselement oder ein erster Sensor zur Erfassung oder Detektion der Identifikationsinformation des Presswerkzeugs (520) und wobei ein zweites Erfassungselement oder ein zweiter Sensor zur Erfassung oder Detektion der Identifikationsinformation des Leitungselements (110) vorgesehen ist, wobei im ersten Schritt
-- zunächst die Erfassung oder Detektion der Identifikationsinformation des Presswerkzeugs (520) und anschließend die Erfassung oder Detektion der Identifikationsinformation des Leitungselements (110) erfolgt, oder
-- zunächst die Erfassung oder Detektion der Identifikationsinformation des Leitungselements (110) und anschließend die Erfassung oder Detektion der Identifikationsinformation des Presswerkzeugs (520) erfolgt, oder
-- gleichzeitig oder zumindest teilweise gleichzeitig die Erfassung oder Detektion der Identifikationsinformation des Leitungselements (110) und die Erfassung oder Detektion der Identifikationsinformation des Presswerkzeugs (520) erfolgt.

4. Verfahren nach einem der vorhergehenden Ansprüche, **dadurch gekennzeichnet, dass** die Kennzeichnungselemente jeweils in Form eines optisch erkennbaren Aufdrucks oder Labels oder einer optisch erkennbaren Oberfläche ausgebildet sind und dass die Erfassung oder die Detektion der Identifikationsinformation oder der Identifikationsinformationen durch jeweils optische Erfassung des Kennzeichnungselements oder der Kennzeichnungselemente erfolgt, insbesondere durch optische Detektion einer Farbe oder einer Mehrzahl von Farben oder einer Mehrzahl angeordneter Farbflächen, wobei insbesondere zur Erfassung oder Detektion der Identifikationsinformation oder der Identifikationsinformationen eine Bestrahlung oder Beleuchtung des Bereichs des jeweiligen Kennzeichnungselements mit einer entsprechenden elektromagnetischen Strahlung erfolgt.

5. Pressgerät, insbesondere elektrohydraulisches Pressgerät, zur Herstellung einer Verbindung zwischen einem Leitungselement (110) und einem weiteren Leitungselement (210) oder zwischen dem Leitungselement (110) und einem dritten Leitungselement (310), wobei das Pressgerät einen Antrieb zum Bewegen eines Presswerkzeugs (520) umfasst, wobei das Leitungselement (110) wenigstens ein Kennzeichnungselement (160) aufweist, umfasst oder mit diesem verbunden ist und wobei das Presswerkzeug (520) wenigstens ein Kennzeichnungselement (560) aufweist, umfasst oder mit diesem verbunden ist, wobei die Kennzeichnungselemente (160, 560) jeweils eine Identifikationsinformation aufweisen oder beinhalten, wobei die Anordnung aus Pressgerät und Presswerkzeug eine Erfassungseinrichtung (550) zur Erfassung von wenigstens einer der Identifikationsinformationen der Kennzeichnungselemente (160, 560) aufweist, umfasst oder mit dieser verbunden ist,
wobei insbesondere das Pressgerät die Erfassungseinrichtung (550) umfasst,
wobei die Anordnung aus Pressgerät und Presswerkzeug und die Erfassungseinrichtung (550) derart konfiguriert sind, dass die Herstellung der mechanischen Verbindung des Leitungselements (110) mit dem weiteren Leitungselement (210) das Erfassen oder die Detektion von wenigstens einer der Identifikationsinformationen erfordert oder voraussetzt.

6. Presswerkzeug (520) für ein Pressgerät (510) nach Anspruch 5, wobei das Presswerkzeug (520 eine Erfassungseinrichtung und/oder ein Kennzeichnungselement (560) aufweist.

7. Erfassungseinrichtung für ein Pressgerät nach Anspruch 5 oder für ein Presswerkzeug nach Anspruch 6.

8. Leitungselement (110) mit wenigstens einem Verbindungsbereich (140), wobei der Verbindungsbereich (140) zur Herstellung einer mechanischen Verbindung, insbesondere in Form einer Verpressung, des Leitungselements (110) mit einem weiteren Leitungselement (210) vorgesehen ist,
wobei das Leitungselement (110) wenigstens ein Kennzeichnungselement (160) aufweist, umfasst oder mit diesem verbunden ist,
wobei das Kennzeichnungselement (160) eine Identifikationsinformation aufweist oder beinhaltet und wobei das Leitungselement (110) und das Kennzeichnungselement (160) derart konfiguriert sind, dass die Herstellung der mechanischen Verbindung des Leitungselements (110) mit dem weiteren Leitungselement (210) das Erfassen oder die Detektion der Identifikationsinformation erfordert oder voraussetzt.

9. Leitungselement (110) nach Anspruch 8, **dadurch gekennzeichnet, dass** das weitere Leitungselement (210) wenigstens ein weiteres Kennzeichnungselement (260) - insbesondere in wenigstens einem weiteren Verbindungsbereich (240) - aufweist, umfasst oder mit diesem verbunden ist,
wobei das weitere Kennzeichnungselement (260) eine weitere Identifikationsinformation aufweist oder beinhaltet und wobei das Leitungselement (110) und das weitere Kennzeichnungselement (260) derart konfiguriert sind, dass die Herstellung der mechanischen Verbindung des Leitungselements (110) mit dem weiteren Leitungselement (210) das Erfassen oder die Detektion auch der weiteren Identifikationsinformation erfordert oder voraussetzt.

10. Leitungselement (110) nach Anspruch 8 oder 9, **dadurch gekennzeichnet, dass** das Kennzeichnungselement (160) und/oder das weitere Kennzeichnungselement (260) und/oder das dritte Kennzeichnungselement (360) und/oder das zusätzliche Kennzeichnungselement (460) in Form wenigstens eines der nachfolgenden Kennzeichnungselemente realisiert ist:
-- in Form eines optisch erkennbaren Aufdrucks oder Labels - insbesondere als Barcode oder QR-Code -, positioniert in einem Bereich der äußeren oder inneren Oberfläche des Leitungselements (110) oder des weiteren Leitungselements (210) oder des dritten Leitungselements (310), insbesondere im oder in räumlicher Nähe des Verbindungsbereichs (140) oder des weiteren Verbindungsbereichs (240) oder des dritten Verbindungsbereichs (340) oder des zusätzlichen Verbindungsbereichs (440),
-- in Form eines elektromagnetisch auslesbaren Transponderelements oder RFID-Tag-Elements, positioniert in einem Bereich der äußeren oder inneren Oberfläche des Leitungselements (110) oder des weiteren Leitungselements (210), insbesondere im oder in räumlicher Nähe des Verbindungsbereichs (140) oder des weiteren Verbindungsbereichs (240) oder des dritten Verbindungsbereichs (340) oder des zusätzlichen Verbindungsbereichs (440).

11. Leitungselement (110) nach einem der Ansprüche 8 bis 10, **dadurch gekennzeichnet, dass** die Identifikationsinformation das Leitungselement (110) oder den Verbindungsbereich (140) des Leitungselements (110) identifiziert, insbesondere eindeutig und individualisiert identifiziert, und/oder dass die weitere Identifikationsinformation das weitere Leitungselement (210) identifiziert, insbesondere eindeutig und individualisiert identifiziert, und/oder dass die dritte Identifikationsinformation das dritte Leitungselement (310) identifiziert, insbesondere eindeutig und individualisiert identifiziert, und/oder die zusätzliche Identifikationsinformation das Leitungselement (110) oder den zusätzlichen Verbindungsbereich (440) des Leitungselements (110) identifiziert, insbesondere eindeutig und individualisiert identifiziert,
wobei diese Identifizierung oder individuelle Identifizierung insbesondere eine Materialinformation umfasst.

12. Leitungselement (110) nach einem der Ansprüche 8 bis 11, **dadurch gekennzeichnet, dass** die Herstellung der mechanischen Verbindung des Leitungselements (110) mit dem weiteren Leitungselement (210) das Kennzeichnungselement (160) und/oder das weitere Kennzeichnungselement (260) zumindest teilweise zerstört und/oder dass die Herstellung der mechanischen Verbindung des Leitungselements (110) mit dem dritten Leitungselement (310) das dritte Kennzeichnungselement (360) und/oder das zusätzliche Kennzeichnungselement (460) zumindest teilweise zerstört.

13. Leitungselement (110) nach einem der Ansprüche 8 bis 12, **dadurch gekennzeichnet, dass** das Leitungselement (110) ein Fitting oder ein Rohr oder ein Kabel ist.
